# EUROPEAN PATENT APPLICATION

(11) **EP 4 607 633 A1**
(43) Date of publication of application: **27.08.2025**
(21) Application number: 23956998.1
(22) Date of filing: 13.12.2023
(51) Int. Cl.: H01M 10/04

(54) **BATTERY ASSEMBLING SYSTEM AND CONTROL METHOD THEREFOR, AND BATTERY PRODUCTION LINE**

(30) Priority: 07.12.2023 CN 202311668047
(71) Applicant: Contemporary Amperex Technology Co., Ltd., Ningde, Fujian 352100 (CN); Contemporary Amperex Technology (Hong Kong) Limited, Central, Hong Kong (HK)
(72) Inventor: The designation of the inventor has not yet been filed
(74) Representative: Gong, Jinping
(86) International application number: PCT/CN2023/138388
(87) International publication number: WO 2025/118326

(57) **Abstract**

This disclosure proposes a battery assembly system, a control method, and a battery production line; and relates to the field of battery technologies. The battery assembly system can reduce the risk of congestion during the return process of trays and facilitate the miniaturization of the battery assembly system. The battery assembly system includes a stacking platform, an assembly apparatus, an assembly circulation line, and a return apparatus. The stacking platform is configured to store trays and battery modules located within the trays; one end of the assembly apparatus is connected to one end of the stacking platform via the assembly circulation line; the assembly apparatus is configured to perform assembly process for to-be-assembled battery modules; the assembly circulation line is configured to transport trays carrying the to-be-assembled battery modules to the assembly apparatus; another end of the assembly apparatus is connected to another end of the stacking platform via the return apparatus; and the return apparatus is configured to transport trays carrying assembled battery modules to the stacking platform.

## Description

### CROSS-REFERENCE TO RELATED APPLICATIONS

This disclosure is filed based on Chinese patent application No. 202311668047.0, filed on December 7, 2023 and entitled "BATTERY ASSEMBLY SYSTEM, CONTROL METHOD, AND BATTERY PRODUCTION LINE", and claims the priority of this Chinese patent application, which is incorporated herein by reference in its entirety.

### TECHNICAL FIELD

This disclosure relates to the field of battery technologies, and in particular to a battery assembly system, a control method, and a battery production line.

### BACKGROUND

During the production process of batteries, trays are usually used to carry the batteries, so that the batteries can circulate on the production line to storage stations or different production stations.

Different types of batteries can be transported on different types of trays. However, during the transportation process of trays carrying different types of batteries or different types of empty trays via the battery assembly system, there is a problem of transporting the trays to incorrect positions or failing to transport the trays to the corresponding positions in a timely manner.

### SUMMARY

This disclosure provides a battery assembly system, a control method, and a battery production line, which can reduce the risk of congestion during the return process of trays and facilitate the miniaturization of the battery assembly system.

A first aspect of this disclosure provides a battery assembly system. The battery assembly system includes a stacking platform, an assembly apparatus, an assembly circulation line, and a return apparatus. The stacking platform is configured to store trays and battery modules located within the trays; one end of the assembly apparatus is connected to one end of the stacking platform via the assembly circulation line; the assembly apparatus is configured to perform assembly process for to-be-assembled battery modules; the assembly circulation line is configured to transport trays carrying the to-be-assembled battery modules to the assembly apparatus; another end of the assembly apparatus is connected to another end of the stacking platform via the return apparatus; and the return apparatus is configured to transport trays carrying assembled battery modules to the stacking platform.

In the foregoing battery assembly system, as the stacking platform is provided, storage positions can be provided for battery modules and trays through the stacking platform, to store empty trays and battery modules on the stacking platform. Moreover, the assembly apparatus is provided, and the assembly apparatus is connected to the stacking platform via the assembly circulation line, so that the to-be-assembled battery modules can be transported to the assembly apparatus through the assembly circulation line. Meanwhile, the return apparatus is provided, and an output end of the assembly apparatus is connected to the another end of the stacking platform, so that the assembled battery modules and the trays can be transported back to the stacking platform through the return apparatus. In this way, multiple cache positions can be provided for the trays through the return apparatus so as to reduce the risk of congestion during the return process of the trays. In addition, only one stacking platform can be provided to store both empty trays and trays carrying battery modules, which is conducive to the miniaturization of the battery assembly system.

In a possible implementation of this disclosure, the return apparatus includes a diversion apparatus, a first return circulation line, and a second return circulation line. A first end of the diversion apparatus is connected to the assembly apparatus via the assembly circulation line, a second end of the diversion apparatus is connected to one end of the stacking platform via the first return circulation line, and a third end of the diversion apparatus is connected to another end of the stacking platform via the second return circulation line; and the diversion apparatus is configured to divert trays carrying different types of the assembled battery modules to the corresponding first return circulation line or second return circulation line based on the types of the assembled battery modules.

In the foregoing technological means, as the return apparatus is provided with the diversion apparatus, with the first end of the diversion apparatus connected to the assembly circulation line, the second end of the diversion apparatus connected to the first return circulation line, and the third end of the diversion apparatus connected to the second return circulation line, different types of trays can be diverted to the corresponding different return circulation lines through the diversion apparatus. This can allow different trays and/or trays carrying assembled battery modules to be transported to the stacking platform via the corresponding return circulation lines, and can also increase cache positions through at least two return circulation lines, so as to reduce the risk of congestion during the return process of the trays.

In a possible implementation of this disclosure, the diversion apparatus includes a diversion support, a diversion jacking mechanism, and a diversion transport mechanism. The diversion support is installed at a position corresponding to the first return circulation line; one end of the diversion jacking mechanism is connected to the diversion support, and another end of the diversion jacking mechanism is connected to the diversion transport mechanism; the diversion jacking mechanism is capable of driving the diversion transport mechanism to move along a third direction; and the diversion transport mechanism is configured to support the trays and is capable of transporting the trays to the first return circulation line along a first direction, the first direction intersecting with the third direction.

In the foregoing technological means, as the diversion apparatus is provided with the diversion support, installation positions can be provided for other components in the diversion apparatus through the diversion support, and the diversion apparatus can be fixed at a corresponding station through the diversion support. Moreover, as the diversion transport mechanism is provided, the original movement direction of the trays can be changed through the diversion transport mechanism, so that some trays can be transported to the first return circulation line. Meanwhile, as the diversion jacking mechanism is provided between the diversion transport mechanism and the diversion support, the diversion transport mechanism can be driven by the diversion jacking mechanism to move, thereby changing a position of the diversion transport mechanism with respect to the second return circulation line, so that the trays that need to be transported along the first return circulation line can be supported on the diversion transport mechanism, thereby achieving the diversion of the trays.

In a possible implementation of this disclosure, the diversion transport mechanism includes a diversion transport drive component and a diversion frame. The diversion frame is installed on the diversion jacking mechanism; the diversion transport drive component is installed on the diversion frame; and the diversion transport drive component is configured to support the trays and is capable of transporting the trays along the first direction.

In the foregoing technological means, as the diversion transport mechanism is provided with the diversion frame, the diversion transport mechanism may be connected to the diversion jacking mechanism through the diversion frame; meanwhile, the diversion frame is provided with the diversion transport drive component, and the diversion transport drive component is arranged to be a structure capable of moving along the first direction, so that under the drive of the diversion jacking mechanism, the diversion transport drive component first abuts against the trays that need to be diverted to support the trays on the diversion transport drive component, and then transports the trays to the first return circulation line through the diversion transport drive component.

In a possible implementation of this disclosure, the return apparatus further includes a lifting apparatus and a third return circulation line. One end of the lifting apparatus is connected to the second end of the diversion apparatus via the first return circulation line, and another end of the lifting apparatus is connected to one end of the stacking platform via the third return circulation line; the third end of the diversion apparatus is connected to another end of the lifting apparatus via the second return circulation line; the lifting apparatus is configured to transport the trays located on the first return circulation line or the second return circulation line to the third return circulation line according to a scheduling instruction; and along the third direction, at least a portion of the second return circulation line overlaps with the assembly circulation line, and at least another portion of the second return circulation line overlaps with the third return circulation line.

In the foregoing technological means, as the return apparatus is provided with the lifting apparatus, with both the first return circulation line and the second return circulation line connected to the lifting apparatus, and the lifting apparatus further connected to the stacking platform via the third return circulation line, the scheduling of the return process of the trays located on the first return circulation line and the second return circulation line can be completed through the lifting apparatus, so as to control the progress of the return of the trays and the assembled battery modules on the trays to the stacking platform, thereby reducing the congestion of the trays and the assembled battery modules on the stacking platform or the return circulation line. Meanwhile, the second return circulation line overlaps with the assembly circulation line and the third return circulation line, which can reduce the space occupied by the second return circulation line, thereby reducing the volume of the battery assembly system.

In a possible implementation of this disclosure, the lifting apparatus includes a lifting support, a lifting mechanism, and a lifting transport mechanism. The lifting mechanism is installed on the lifting support; the lifting transport mechanism is installed on the lifting mechanism; the lifting mechanism is capable of driving the lifting transport mechanism to move along the third direction with respect to the lifting support; and the lifting transport mechanism is configured to transport the trays to the third return circulation line along a second direction, the second direction having an included angle with the third direction.

In the foregoing technological means, as the lifting apparatus is provided with the lifting support, installation positions can be provided for various components in the lifting apparatus through the lifting support, and the lifting apparatus is installed at a corresponding station through the lifting support. In addition, as the lifting apparatus is provided with the lifting mechanism installed on the lifting support, movement along the third direction can be generated through the lifting mechanism, so that the trays can be transported through the lifting mechanism to the position corresponding to the third return circulation line. Meanwhile, as the lifting mechanism is provided with the lifting transport mechanism, the trays corresponding to the third return circulation line can be transported to the third return circulation line through the lifting transport mechanism.

In a possible implementation of this disclosure, the lifting mechanism includes a lifting drive component, a lifting guide component, and a lifting frame. The lifting guide component is installed on the lifting support; the lifting frame is installed on the lifting guide component; one end of the lifting drive component is connected to the lifting support, and another end of the lifting drive component is connected to the lifting frame; and under the drive of the lifting drive component, the lifting frame is capable of moving along the third direction.

In the foregoing technological means, as the lifting mechanism is provided with the lifting guide component, the movement direction of the lifting frame can be limited through the lifting guide component, and installation positions can be provided for the lifting transport mechanism through the lifting frame to install the lifting transport mechanism on the lifting mechanism. Meanwhile, the lifting drive component is provided between the lifting support and the lifting frame, so that a driving force can be provided for the lifting frame through the lifting drive component to drive the lifting frame to move along the third direction.

In a possible implementation of this disclosure, the lifting transport mechanism includes a lifting transport frame and a lifting transport drive component. The lifting transport frame is installed on the lifting frame; the lifting transport drive component is installed on the lifting transport frame; and the lifting transport drive component is configured to support the trays and is capable of transporting the trays to the third return circulation line along the second direction.

In the foregoing technological means, as the lifting transport mechanism is provided with the lifting transport frame, the lifting transport mechanism may be connected to the lifting frame through the lifting transport frame, so that the lifting transport mechanism is connected to the lifting mechanism. Meanwhile, the lifting transport frame is provided with the lifting transport drive component, and the lifting transport drive component is arranged to be a structure capable of moving along the second direction, so that under the drive of the lifting mechanism, the lifting transport drive component can transport the trays to a position corresponding to the third return circulation line, and then can transport the trays to the third return circulation line through the lifting transport drive component.

In a possible implementation of this disclosure, the lifting apparatus further includes a lifting limit mechanism. In the second direction, the lifting limit mechanism is provided at each of two ends of the lifting transport frame, and the lifting limit mechanism is capable of moving along the third direction to limit the movement of the trays with respect to the lifting transport mechanism along the second direction.

In the foregoing technological means, as the lifting apparatus is provided with the lifting limit mechanism, the movement position of the trays on the lifting transport mechanism can be limited through the lifting limit mechanism, so that the trays can stop at a determined position on the lifting transport mechanism, so as to reduce the risk of the trays rushing out from the lifting transport mechanism.

In a possible implementation of this disclosure, the lifting apparatus further includes a lifting detection member. In the second direction, the lifting detection member is provided at each of two ends of the lifting apparatus, and the lifting detection member is configured to detect a movement state of the trays.

In the foregoing technological means, as the lifting apparatus is provided with the lifting detection member, the lifting detection member may be used to detect the movement state of the trays on the lifting transport mechanism, for example, detecting whether the trays are in place, or detecting whether the trays are moving to the lifting transport mechanism, or detecting whether the trays have been separated from the lifting transport mechanism, so that the next movement action to be executed by the lifting apparatus may be controlled based on the detected movement state of the trays.

In a possible implementation of this disclosure, the assembly apparatus includes a pressurizing apparatus, and the pressurizing apparatus includes a pressurizing support and a pressurizing mechanism. The pressurizing support is provided at a position corresponding to the assembly circulation line, the pressurizing mechanism is installed on the pressurizing support, the pressurizing mechanism is configured to apply a pressing force to the to-be-assembled battery modules, and the assembly circulation line is capable of transporting trays carrying the to-be-assembled battery modules to a position corresponding to the pressurizing mechanism in the pressurizing apparatus.

In the foregoing technological means, as the assembly apparatus is provided with the pressurizing apparatus, and the pressurizing apparatus is arranged to be a structure including the pressurizing support and the pressurizing mechanism, installation positions may be provided for other components in the pressurizing apparatus through the pressurizing support, the pressurizing apparatus is installed at a corresponding station, and a pressing force may be applied to the to-be-assembled battery modules through the pressurizing mechanism, so that the battery modules reach the desired structural state.

In a possible implementation of this disclosure, the pressurizing apparatus further includes a pressurizing movable mechanism. The pressurizing movable mechanism is movably provided on the pressurizing support and is capable of moving along the first direction with respect to the pressurizing support.

In the foregoing technological means, as the pressurizing support of the pressurizing apparatus is movably provided with the pressurizing movable mechanism, and the pressurizing movable mechanism may move along the first direction with respect to the pressurizing support, installation points can be provided for other mechanisms such as the pressurizing mechanism through the pressurizing movable mechanism; and other mechanisms such as the pressurizing mechanism provided on the pressurizing movable mechanism can be driven through the pressurizing movable mechanism to move along the first direction, so that in the process of transporting the to-be-assembled battery modules from the assembly circulation line to the pressurizing apparatus, the to-be-assembled battery modules can be avoided, and after the to-be-assembled battery modules are in place in the pressurizing apparatus, other mechanisms such as the pressurizing mechanism can be driven through the pressurizing movable mechanism to move towards the to-be-assembled battery modules.

In a possible implementation of this disclosure, the pressurizing mechanism includes a pressurizing drive component, a pressurizing guide component, and a pressurizing member. The pressurizing guide component is connected to the pressurizing movable mechanism and extends along the second direction; the pressurizing member is installed on the pressurizing guide component; one end of the pressurizing drive component is connected to the pressurizing movable mechanism, and another end of the pressurizing drive component is connected to the pressurizing member; and under the drive of the pressurizing drive component, the pressurizing member is capable of moving along the second direction to abut against or separate from the to-be-assembled battery modules, the first direction having an included angle with the second direction.

In the foregoing technological means, as the pressurizing mechanism is provided with the pressurizing guide component extending along the second direction, the pressurizing member may be connected to the pressurizing guide component, and the pressurizing member can move along the second direction through the pressurizing guide component. As the pressurizing mechanism is provided with the pressurizing drive component connected to the pressurizing movable mechanism and the pressurizing member, a driving force can be provided for the pressurizing member through the pressurizing drive component, so that the pressurizing member can reciprocate along the second direction through the pressurizing guide component, thereby allowing the pressurizing member to abut against or separate from the to-be-assembled battery modules, and further providing pressing force along the second direction to the to-be-assembled battery modules to press and compress the to-be-assembled battery modules.

In a possible implementation of this disclosure, the pressurizing apparatus further includes a pressurizing lateral limit mechanism, and the pressurizing lateral limit mechanism includes a pressurizing lateral limit drive member and a pressurizing lateral limit member. The pressurizing lateral limit drive member is connected to the pressurizing movable mechanism; the pressurizing lateral limit member is installed on the pressurizing lateral limit drive member; and under the drive of the pressurizing lateral limit drive member, the pressurizing lateral limit member is capable of moving along the second direction to abut against or separate from the trays.

In the foregoing technological means, as the pressurizing movable mechanism is provided with the pressurizing lateral limit drive member, and an output shaft of the pressurizing lateral limit drive member is provided with the pressurizing lateral limit member, the pressurizing lateral limit mechanism can be driven through the pressurizing movable mechanism to move to a position corresponding to one side of the trays, and then the pressurizing lateral limit member can be driven through the pressurizing lateral limit drive member to move along the second direction, so that the pressurizing lateral limit member can abut against or separate from one side of the trays, thereby limiting the trays along the second direction.

In a possible implementation of this disclosure, the pressurizing apparatus further includes a tightening mechanism, and the tightening mechanism includes a tightening drive member and a tightening member. The tightening drive member is connected to the pressurizing movable mechanism; the tightening member is connected to the tightening drive member; and under the drive of the tightening drive member, the tightening member is capable of moving along the second direction so that the tightening member is connected to an adjustment member on the trays, and the tightening member is configured to drive the adjustment member to move so that pressure-holding components on the trays are driven through the adjustment member to abut against the assembled battery modules.

In the foregoing technological means, as the pressurizing apparatus is provided with the tightening mechanism, and the tightening mechanism is configured to include the connected tightening drive member and tightening member, the tightening member can be driven by the tightening drive member to move along the second direction, so that the tightening member is connected to an adjustment member in the trays; and the adjustment member can be driven through the tightening member to rotate, so that the pressure-holding components in the trays are driven through the adjustment member to move, the pressure-holding components can abut against the assembled battery modules, and the assembled battery modules are kept in the pressed state through the pressure-holding components.

In a possible implementation of this disclosure, the pressurizing apparatus further includes a pole limit mechanism, and the pole limit mechanism includes a pole vertical drive component, a pole vertical guide component, and a pole limit member. The pole vertical guide component is installed on the pressurizing movable mechanism and extends along the third direction; the pole limit member is installed on the pole vertical guide component; one end of the pole vertical drive component is connected to the pressurizing movable mechanism, and another end of the pole vertical drive component is connected to the pole limit member; and under the drive of the pole vertical drive component, the pole limit member is capable of moving along the third direction to abut against or separate from the to-be-assembled battery modules, the third direction having an included angle with the first direction.

In the foregoing technological means, as the pressurizing apparatus is provided with the pole limit mechanism, the pole limit member can be driven to move along the third direction by the pole vertical drive component in the pole limit mechanism to allow the pole limit member to abut against poles on the to-be-assembled battery modules, thereby limiting the movement of the poles and reducing the deformation of the poles during the compression process of the to-be-assembled battery modules.

In a possible implementation of this disclosure, the pole limit mechanism further includes a pole lateral drive component and a pole lateral guide component. The pole lateral guide component is connected to the pressurizing movable mechanism; one end of the pole lateral drive component is connected to the pressurizing movable mechanism, and another end of the pole lateral drive component is connected to the pole lateral guide component; the pole vertical guide component is connected to the pole lateral guide component; the pole vertical drive component is provided on the pole lateral guide component; and under the drive of the pole lateral drive component, the pole vertical guide component is capable of moving along the second direction to drive the pole limit member to move along the second direction.

In the foregoing technological means, as the pole limit mechanism is provided with the pole lateral drive component and the pole lateral guide component, and the pole lateral guide component is arranged to be a structure extending along the second direction, the pole vertical guide component can be driven by the pole lateral drive component to move along the second direction, so as to drive the pole limit member to move along the second direction as well, so that the position of the pole limit member along the second direction can be adjusted, and thus the pole limit mechanism corresponds to positions of poles of different types of to-be-assembled battery modules, so as to improve the applicability of the pressurizing apparatus.

In a possible implementation of this disclosure, the pressurizing apparatus further includes a pressurizing jacking mechanism and a pressurizing longitudinal limit mechanism. The pressurizing jacking mechanism is installed on the pressurizing support, and the pressurizing jacking mechanism is configured to support the trays and is capable of driving the trays to move along the third direction; and the pressurizing longitudinal limit mechanism is installed on the pressurizing support and is capable of moving along the first direction to abut against or separate from the trays.

In the foregoing technological means, as the pressurizing apparatus is provided with the pressurizing jacking mechanism, the trays can be jacked to a specific height through the pressurizing jacking mechanism, so that the to-be-assembled battery modules carried on the trays are in a preset height position. Moreover, as the pressurizing apparatus is provided with the pressurizing longitudinal limit mechanism, the position of the trays with respect to the pressurizing apparatus along the first direction can be limited through the pressurizing longitudinal limit mechanism, so that the trays and the to-be-assembled battery modules are in fixed positions along the first direction.

In a possible implementation of this disclosure, the assembly apparatus further includes an installation apparatus and a shaping apparatus. The installation apparatus is provided at a position corresponding to the assembly circulation line and is located on a side of the pressurizing apparatus close to the stacking platform, and the installation apparatus is configured to install to-be-assembled parts on the to-be-assembled battery modules; and the shaping apparatus is provided at a position corresponding to the assembly circulation line and is located on a side of the pressurizing apparatus far away from the stacking platform, and the shaping apparatus is configured to provide shaping components on the pressurized battery modules to maintain existing shapes of the pressurized battery modules through the shaping components.

In the foregoing technological means, as the assembly apparatus is provided with the installation apparatus, required parts can be installed on the to-be-assembled battery modules through the installation apparatus; meanwhile, as the assembly apparatus is provided with the shaping apparatus, shaping components can be provided on the pressurized battery modules after being pressurized by the pressurizing apparatus through the shaping apparatus, so that the battery modules can maintain their existing shapes.

A second aspect of this disclosure provides a battery production line, where the battery production line includes: the battery assembly system according to any one of the first aspect, a production device, a transfer device, and a robot. The production device is configured to produce to-be-assembled battery modules; the transfer device is configured to transport the to-be-assembled battery modules from the production device to the stacking platform, or to transport assembled battery modules from the stacking platform to a target station; and the robot is provided at a position corresponding to the stacking platform, and the robot is configured to take out the to-be-assembled battery modules from the transfer device and place them in trays on the stacking platform, or to take out assembled battery modules from trays and place them on the transfer device.

In the foregoing technological means, as the battery production line is provided with the transfer device, the transfer device can transport the battery modules, so that the battery modules can reach different target stations; and as the robot is provided close to the stacking platform, the battery modules can be transported from the stacking platform to the transfer device through the robot, or transported from the transfer device to the trays on the stacking platform, so as to improve the production efficiency of the battery; meanwhile, the battery assembly system is provided, which can reduce the risk of congestion during the return process of the trays and facilitate the miniaturization of the battery assembly system.

A third aspect of this disclosure provides a control method of battery assembly system, where the battery assembly system includes a stacking platform, an assembly apparatus, an assembly circulation line connecting one end of the stacking platform to one end of the assembly apparatus, and a return apparatus connecting another end of the stacking platform to another end of the assembly apparatus. The control method of battery assembly system includes: in response to an assembly instruction, controlling the assembly circulation line to transport to-be-assembled battery modules located on the stacking platform to the assembly apparatus; controlling the assembly apparatus to perform assembly action for the to-be-assembled battery modules; and controlling the return apparatus to transport assembled battery modules to the stacking platform, where the assembled battery modules include a battery module assembled by the assembly apparatus.

In the foregoing technological means, as the to-be-assembled battery modules located on the stacking platform are transported through the assembly circulation line, the assembly circulation line can be controlled to transport the to-be-assembled battery modules to the corresponding assembly apparatus; and the assembly apparatus can be controlled to perform corresponding assembly action for the to-be-assembled battery modules to assemble the to-be-assembled battery modules. Meanwhile, as the assembly apparatus is connected to the stacking platform through the return apparatus, the return apparatus can be controlled during its operation to return the trays and the fully assembled battery modules to the stacking platform. In this way, compared to directly transporting the assembled battery modules from the assembly apparatus to the stacking platform, controlling the return apparatus not only can allow the trays and battery modules to be temporarily stored in the return apparatus through cache positions provided by the return apparatus, can better schedule the return process of the trays and battery modules, enabling the trays and battery modules to quickly return to the stacking platform, but also can reduce the risk of congestion during the return process of the trays and battery modules.

In a possible implementation of this disclosure, the assembly apparatus includes a pressurizing apparatus, where one end of the pressurizing apparatus is connected to the stacking platform via the assembly circulation line, and another end of the pressurizing apparatus is connected to the return apparatus via the assembly circulation line; the pressurizing apparatus includes a pressurizing jacking mechanism, a pressurizing limit mechanism, a pole limit mechanism, a pressurizing mechanism, and a tightening mechanism; the assembly instruction includes a pressurizing instruction; and the controlling the assembly apparatus to perform assembly process for the to-be-assembled battery modules includes: in response to the pressurizing instruction, controlling the pressurizing jacking mechanism to perform jacking action to drive the trays transported to the pressurizing jacking mechanism from the assembly circulation line to move along a third direction; where the trays carry the to-be-assembled battery modules; controlling the pressurizing limit mechanism to perform pressurizing limit action to allow the pressurizing limit mechanism to abut against the trays to limit the movement of the trays in a plane perpendicular to the third direction; controlling the pole limit mechanism to move towards the to-be-assembled battery modules carried on the trays to allow the pole limit mechanism to abut against poles on the to-be-assembled battery modules; controlling the pressurizing mechanism to perform pressurizing action to allow the pressurizing mechanism to move along a second direction to abut against the to-be-assembled battery modules until a pressure force applied by the pressurizing mechanism to the to-be-assembled battery modules reaches a preset pressurizing value; where the second direction has an included angle with the third direction; and controlling the tightening mechanism to perform tightening action to allow pressure-holding components on the trays to move to a preset pressure-holding position to continuously provide a pressing force to assembled battery modules.

In the foregoing technological means, controlling the pressurizing jacking mechanism to perform the jacking action can allow the to-be-assembled battery modules to move along the third direction to the position to which the pressing force needs to be applied; controlling the pressurizing limit mechanism to perform the pressurizing limit action can limit the trays through the pressurizing limit mechanism; controlling the pole limit mechanism to perform the limit action can limit the movement of the poles through the pole limit mechanism; controlling the pressurizing mechanism to perform the pressurizing action can complete the pressurizing action for the to-be-assembled battery modules, making the to-be-assembled battery modules have the required tightness; and controlling the tightening mechanism to perform the tightening action can continuously provide pressing force to the to-be-assembled battery modules through the pressure-holding components.

In a possible implementation of this disclosure, the return apparatus includes a diversion apparatus, a lifting apparatus, and a first return circulation line connecting a second end of the diversion apparatus and one end of the lifting apparatus; the assembly instruction further includes a diversion instruction; and the controlling the return apparatus to transport assembled battery modules to the stacking platform includes: when the trays reach a preset diversion position, in response to the diversion instruction, obtaining tray type information of the trays; where the trays carry the assembled battery modules matching the tray type information; and controlling, based on the tray type information, the diversion apparatus to change a movement direction of first trays in the trays transported to the diversion apparatus from the assembly circulation line to divert the first trays to the first return circulation line.

In the foregoing technological means, the tray type information is obtained when the trays reach the preset diversion position, it can be determined based on the tray type information whether the movement direction of the trays needs to be changed through the diversion apparatus to allow the trays to move to the first return circulation line; and if it is determined that the trays are the first trays, the diversion action can be performed through the diversion apparatus to transport the first trays to the first return circulation line.

In a possible implementation of this disclosure, the return apparatus further includes a second return circulation line and a third return circulation line; where a third end of the diversion apparatus is connected to another end of the lifting apparatus via the second return circulation line, and another end of the lifting apparatus is further connected to the stacking platform via the third return circulation line; the lifting apparatus includes a lifting mechanism and a lifting transport mechanism connected to the lifting mechanism; the assembly instruction further includes a scheduling instruction; and the controlling the return apparatus to transport assembled battery modules to the stacking platform further includes: in response to the scheduling instruction, controlling the first return circulation line or the second return circulation line to transport to-be-lifted trays in the trays matching the scheduling instruction to the lifting transport mechanism; controlling the lifting mechanism to perform lifting action to drive the lifting transport mechanism to transport the to-be-lifted trays to a position corresponding to the third return circulation line; and controlling the lifting transport mechanism to perform transport action to transport the to-be-lifted trays to the third return circulation line.

In the foregoing technological means, controlling the first return circulation line or the second return circulation line to perform the transport action can transport the to-be-lifted trays corresponding to the scheduling instruction to the lifting transport mechanism; controlling the lifting mechanism in the lifting apparatus to perform the lifting action can transport the to-be-lifted trays to the position corresponding to the third return circulation line; and controlling the lifting transport mechanism to perform the transport action can transport the to-be-lifted trays to the third return circulation line, to complete the lifting of the to-be-lifted trays.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred implementations and are not intended to limit this disclosure. Moreover, throughout the accompanying drawings, the same reference signs represent the same parts. In the accompanying drawings:
FIG. 1 is a schematic diagram of a composition structure of a battery production line according to an embodiment of this disclosure;
FIG. 2 is a first schematic structural diagram of a diversion apparatus according to an embodiment of this disclosure;
FIG. 3 is a second schematic structural diagram of a diversion apparatus according to an embodiment of this disclosure;
FIG. 4 is a schematic structural diagram of a lifting apparatus according to an embodiment of this disclosure;
FIG. 5 is a schematic structural diagram of some mechanisms in a lifting apparatus according to an embodiment of this disclosure;
FIG. 6 is a schematic structural diagram of a pressurizing apparatus according to an embodiment of this disclosure;
FIG. 7 is a first schematic structural diagram of some mechanisms in a pressurizing apparatus according to an embodiment of this disclosure;
FIG. 8 is a schematic structural diagram of a pole limit mechanism in a pressurizing apparatus according to an embodiment of this disclosure;
FIG. 9 is a second schematic structural diagram of some mechanisms in a pressurizing apparatus according to an embodiment of this disclosure;
FIG. 10 is a first flowchart of a control method of battery assembly system according to an embodiment of this disclosure;
FIG. 11 is a second flowchart of a control method of battery assembly system according to an embodiment of this disclosure;
FIG. 12 is a third flowchart of a control method of battery assembly system according to an embodiment of this disclosure; and
FIG. 13 is a fourth flowchart of a control method of battery assembly system according to an embodiment of this disclosure.

Reference signs are described as follows:
1: pressurizing apparatus; 11: pressurizing support; 12: pressurizing movable mechanism; 121: movable support; 122: movement drive component; 123: movement guide component; 13: pressurizing mechanism; 131: pressurizing drive component; 132: pressurizing guide component; 133: pressurizing member; 134: pressurizing connection member; 14: pressurizing lateral limit mechanism; 141: pressurizing lateral limit drive member; 142: pressurizing lateral limit member; 143: lateral connection member; 15: tightening mechanism; 151: tightening drive member; 152: tightening member; 153: tightening connection member; 16: pole limit mechanism; 161: pole vertical drive component; 162: pole vertical guide component; 163: pole limit member; 164: pole lateral drive component; 165: pole lateral guide component; 166: pole limit connection member; 167: limit support; 168: adjustment drive component; 169: adjustment guide component; 17: pressurizing jacking mechanism; 171: pressurizing jacking drive member; 172: jacking bracket; 18: pressurizing longitudinal limit mechanism; 19: pressurizing position detection member; 2: assembly circulation line; 31: first return circulation line; 32: second return circulation line; 33: third return circulation line; 4: diversion apparatus; 41: diversion support; 42: diversion jacking mechanism; 421: diversion jacking drive member, 422: diversion jacking guide member; 43: diversion transport mechanism; 431: diversion transport drive component; 432: diversion frame; 44: diversion cover; 5: lifting apparatus; 51: lifting support; 52: lifting mechanism; 521: lifting drive component; 522: lifting guide component; 523: lifting frame; 53: lifting transport mechanism; 531: lifting transport frame; 532: lifting transport drive component; 54: lifting limit mechanism; 541: first lifting limit mechanism; 542: second lifting limit mechanism; 55: lifting detection member; 551: first lifting detection member; 552: second lifting detection member; 553: third lifting detection member; 6: layer-changing mechanism; 7: stacking platform; 81: installation apparatus; 82: first shaping apparatus; 83: second shaping apparatus; 84: reserved station; C: first direction; D: second direction; and E: third direction.

### DETAILED DESCRIPTION

The following will describe the embodiments of the technical solutions of this disclosure in detail with reference to the accompanying drawings. The following embodiments are only for a clearer explanation of the technical solutions of this disclosure, and therefore they are only examples and cannot be used to limit the scope of protection of this disclosure.

Unless otherwise defined, all technical and scientific terms used herein have the same meanings as commonly understood by persons of ordinary skill in the art to which this disclosure belongs; the terms used herein are only for the purpose of describing specific embodiments and are not intended to limit this disclosure; the terms "include" and "have" and any variations thereof in the specification and the accompanying drawings of this disclosure are intended to cover non-exclusive inclusions.

In the description of the embodiments of this disclosure, the technical terms "first", "second", "third", and the like are only used to distinguish different objects and cannot be understood as indicating or implying relative importance or implicitly indicating the number, specific order, or primary-secondary relationship of the indicated technical features. In the description of the embodiments of this disclosure, "multiple" means more than two unless otherwise explicitly specified.

As mentioned herein, "embodiment" means that specific features, structures, or characteristics described with reference to an embodiment can be included in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicating orientation or positional relationships are based on the orientation or positional relationships shown in the drawings, and are only for the convenience of describing the embodiments of this disclosure and simplifying the description, rather than indicating or implying that the apparatuses or elements referred to must have specific orientations, be constructed, operated, orused in specific orientations, and therefore should not be understood as limiting the embodiments of this disclosure.

In the description of the embodiments of this disclosure, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this disclosure as appropriate to specific situations.

In the description of the embodiments of this disclosure, unless otherwise explicitly specified and defined, the technical term "contact" should be broadly understood, and may be direct contact or contact through an intermediate medium layer, may be contact between two objects with essentially no interaction force, or may be contact between two objects with interaction force.

This disclosure will be described in detail below.

Currently, the application of new energy batteries in life and industry is becoming more widespread. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With the continuous expansion of application fields of traction batteries, market demands for traction batteries are also increasing.

During the production process of batteries, different types of batteries can be produced on the same production line. In this way, during the transportation process of different types of batteries or the same type of batteries arranged in different ways on trays on the production line, different types of trays can be used to carry different types of batteries on corresponding trays or to carry batteries arranged in different ways on corresponding trays to transport the trays and batteries through the transport apparatus in the battery assembly system, so that the trays and batteries reach corresponding stations.

In related art, during the transportation and circulation process of trays carrying batteries or empty trays, due to different types of trays, the trays, different batteries carried by the trays, or different arrangements of batteries on the trays, it is easy to transport the trays to wrong stations, or due to the large number of trays to be transported, the trays become congested in the battery assembly system, and the batteries cannot be transported to the corresponding stations in a timely manner. Therefore, a battery assembly system that can accurately and quickly schedule different types of trays is needed so as to improve the production efficiency of batteries.

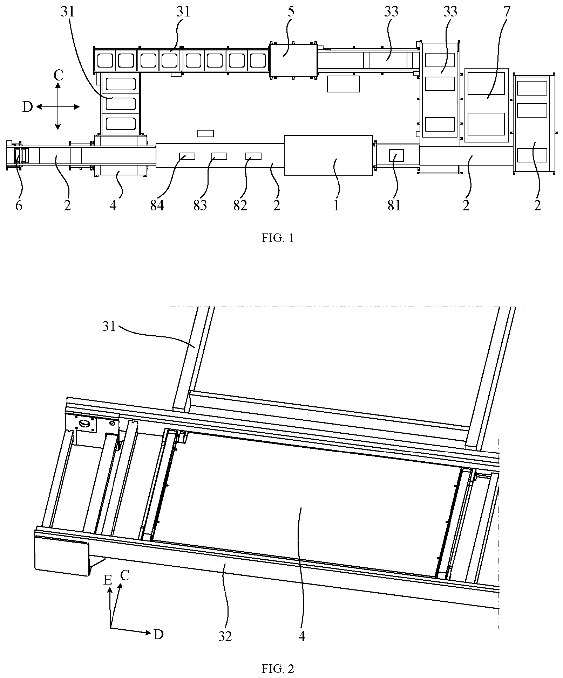

An embodiment of this disclosure provides a battery assembly system. Referring to FIG. 1, FIG. 1 is a schematic diagram of a composition structure of the battery production line according to this embodiment of this disclosure. As shown in FIG. 1, the battery assembly system includes a stacking platform 7, an assembly apparatus, an assembly circulation line 2, and a return apparatus. The stacking platform 7 is configured to store trays and battery modules located within the trays; one end of the assembly apparatus is connected to one end of the stacking platform 7 via the assembly circulation line 2; the assembly apparatus is configured to perform assembly process for to-be-assembled battery modules; the assembly circulation line 2 is configured to transport trays carrying the to-be-assembled battery modules to the assembly apparatus; another end of the assembly apparatus is connected to another end of the stacking platform 7 via the return apparatus; and the return apparatus is configured to transport trays carrying assembled battery modules to the stacking platform 7.

In this embodiment of this disclosure, the stacking platform 7 may be configured to store trays carrying battery modules or empty trays. According to the need, a group of single-row battery modules may be placed on a single-row module tray, or a group of double-row battery modules may be placed on a double-row module tray. The stacking platform 7 may be a frame structure with multiple storage positions, and multiple empty trays or trays carrying battery modules may be stored simultaneously in multiple storage positions.

The assembly apparatus in this embodiment of this disclosure may be configured to assemble battery modules that have not completed some assembly process steps in the production process, and the assembly apparatus may be provided in one or more. For example, the assembly apparatus may be configured to apply pressure to the battery modules to squeeze multiple battery cells in the battery modules and tightly compress them. The assembly apparatus may also be a shaping apparatus configured to shape and fix the battery modules. The assembly apparatus may also be an installation station configured to install parts on the battery modules.

In this embodiment of this disclosure, the multiple assembly apparatuses in the battery assembly system may be connected in sequence through the assembly circulation line 2, so that the to-be-assembled battery modules can be transferred and transported between the assembly apparatuses through the assembly circulation line 2. The stacking platform 7 may also be connected to the assembly apparatus through the assembly circulation line 2, so that the to-be-assembled battery modules can be transported to the assembly apparatus through the assembly circulation line 2. The assembly circulation line 2 may be a conveyor line capable of transporting trays, and the trays can move along an extension direction of the conveyor line.

The return apparatus in this embodiment of this disclosure is configured to transport trays carrying the battery modules that have completed the assembly process back to the stacking platform 7, so that the assembled battery modules and the trays carrying the assembled battery modules return to the stacking platform 7 together. For example, the return apparatus may be configured to include a return circulation line and some devices that can change the transport direction of the trays.

In the foregoing battery assembly system, as the stacking platform 7 is provided, storage positions can be provided for battery modules and trays through the stacking platform 7, to store empty trays and battery modules on the stacking platform 7. Moreover, the assembly apparatus is provided, and the assembly apparatus is connected to the stacking platform 7 via the assembly circulation line 2, so that the to-be-assembled battery modules can be transported to the assembly apparatus through the assembly circulation line 2. Meanwhile, the return apparatus is provided, and an output end of the assembly apparatus is connected to the another end of the stacking platform 7, so that the assembled battery modules and the trays can be transported back to the stacking platform 7 through the return apparatus. In this way, multiple cache positions can be provided for the trays through the return apparatus so as to reduce the risk of congestion during the return process of the trays. In addition, only one stacking platform 7 can be provided to store both empty trays and trays carrying battery modules, which is conducive to the miniaturization of the battery assembly system.

In some embodiments, as shown in FIG. 1, the return apparatus may be arranged to be a structure including a diversion apparatus 4, a first return circulation line 31, and a second return circulation line (not shown in FIG. 1). A first end of the diversion apparatus 4 is connected to the assembly apparatus via the assembly circulation line 2, a second end of the diversion apparatus 4 is connected to one end of the stacking platform 7 via the first return circulation line 31, and a third end of the diversion apparatus 4 is connected to another end of the stacking platform 7 via the second return circulation line; and the diversion apparatus 4 is configured to divert trays carrying different types of the assembled battery modules to the corresponding first return circulation line 31 or second return circulation line based on the types of the assembled battery modules.

In this embodiment of this disclosure, the battery modules have different types, correspondingly, the types of trays used to carry the battery modules are also different, so there are at least two different types of trays, for example, single-row module trays and double-row module trays. The return apparatus may be arranged to be a structure including at least two return circulation lines, so that different types of trays are transported to the stacking platform 7 through different return circulation lines in the process of returning to the stacking platform 7. Meanwhile, the diversion apparatus 4 may be provided in the return apparatus, so that different types of trays are diverted to the corresponding return circulation lines through the diversion apparatus 4.

For example, as shown in FIG. 1, the diversion apparatus 4 may be provided at an end of the assembly circulation line 2 far away from the stacking platform 7. For example, the assembly circulation line 2 may be extended along the second direction D as shown in FIG. 1. In a direction perpendicular to the paper surface in FIG. 1, a portion of the assembly circulation line 2 far away from one end of the stacking platform 7 may be arranged to be a double-layer structure stacked up and down, and a layer-changing mechanism 6 may be provided on this portion of the double-layer structure of the assembly circulation line 2, so that the trays on the upper layer of the assembly circulation line 2 can be transported to the lower layer of the assembly circulation line 2 through the layer-changing mechanism 6. In the direction perpendicular to the paper surface, the diversion apparatus 4 may be provided below the upper layer of this portion of the double-layer structure of the assembly circulation line 2. In the second direction D, the first end of the diversion apparatus 4 may be connected to the end of the assembly circulation line 2 far away from the stacking platform 7, to be specific, the first end of the diversion apparatus 4 is connected to a tail end of the lower layer of the assembly circulation line 2, and the assembly circulation line 2 is connected to the assembly apparatus located between the diversion apparatus 4 and the stacking platform 7. This allows the battery modules that have completed the assembly process in the assembly apparatus to be transported to the diversion apparatus 4 through the assembly circulation line 2.

In another example, in the first direction C, the second end of the diversion apparatus 4 may be connected to one end of the first return circulation line 31, and another end of the first return circulation line 31 may be connected to the stacking platform 7. The second direction D and the first direction C have an included angle, the included angle between the second direction D and the first direction C may be a right angle or an angle close to a right angle, or may be an included angle of other degrees. The embodiments of this disclosure do not limit thereto.

In another example, in the second direction D, the third end of the diversion apparatus 4 may be connected to the second return circulation line, to be specific, the second return circulation line and the assembly circulation line 2 are respectively connected to two opposite ends of the diversion apparatus 4. For example, a portion of the second return circulation line may be provided below the assembly circulation line 2, to be specific, in the direction perpendicular to the paper surface in FIG. 1, a portion of the second return circulation line overlaps with the assembly circulation line 2 and is covered by the assembly circulation line 2. In this way, the diversion apparatus 4 may have two diversion outlets. For example, the diversion apparatus 4 may be configured to: divert the single-row module trays carrying single-row battery modules to the first return circulation line 31, and divert the double-row module trays carrying double-row battery modules to the second return circulation line.

In the foregoing embodiment, as the return apparatus is provided with the diversion apparatus 4, with the first end of the diversion apparatus 4 connected to the assembly circulation line 2, the second end of the diversion apparatus 4 connected to the first return circulation line 31, and the third end of the diversion apparatus 4 connected to the second return circulation line, different types of trays can be diverted to the corresponding different return circulation lines through the diversion apparatus 4. This can allow different trays and/or trays carrying assembled battery modules to be transported to the stacking platform 7 via the corresponding return circulation lines, and can also increase cache positions through at least two return circulation lines, so as to reduce the risk of congestion during the return process of the trays.

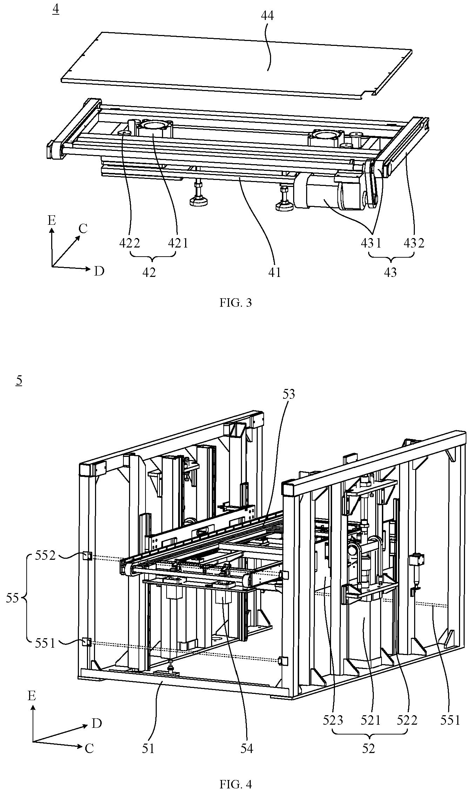

In some embodiments, with reference to FIG. 2 and FIG. 3, FIG. 2 is a first schematic structural diagram of the diversion apparatus according to an embodiment of this disclosure, and FIG. 3 is a second schematic structural diagram of the diversion apparatus according to an embodiment of this disclosure. As shown in FIG. 2 and FIG. 3, the diversion apparatus 4 may be arranged to be a structure including a diversion support 41, a diversion jacking mechanism 42, and a diversion transport mechanism 43. The diversion support 41 is installed at a position corresponding to the first return circulation line 31; one end of the diversion jacking mechanism 42 is connected to the diversion support 41, and another end of the diversion jacking mechanism 42 is connected to the diversion transport mechanism 43; the diversion jacking mechanism 42 is capable of driving the diversion transport mechanism 43 to move along a third direction E; and the diversion transport mechanism 43 is configured to support the trays and is capable of transporting the trays to the first return circulation line 31 along a first direction C, the first direction C intersecting with the third direction E.

In this embodiment of this disclosure, the diversion apparatus 4 may be provided in the second return circulation line, and the diversion apparatus 4 is provided at a position corresponding to the first return circulation line 31. When it is necessary to change the movement direction of the trays located on the second return circulation line, the corresponding movement direction of the trays can be changed through the diversion apparatus 4, so that the trays move along the corresponding return circulation line.

For example, as shown in FIG. 3, to facilitate the fixed installation of the diversion apparatus 4, the diversion support 41 may be provided, which can not only provide other components of the diversion apparatus 4 on the diversion support 41 but also can fix the diversion apparatus 4 at the position corresponding to the first return circulation line 31 through the diversion support 41.

In another example, as the diversion apparatus 4 needs to place the trays on the diversion apparatus 4 before changing the movement direction of the trays, the diversion apparatus 4 may be provided with the diversion jacking mechanism 42. Under the condition that the movement direction of the trays needs to be changed, the diversion transport mechanism 43 in the diversion apparatus 4 can be driven by the diversion jacking mechanism 42 to move, so that the trays can be supported on the diversion transport mechanism 43 and stop moving in the original direction; and under condition that the movement direction of the trays does not need to be changed, the diversion jacking mechanism 42 only needs to stop performing the jacking action, and the trays can continue to move in the original movement direction. One end of the diversion jacking mechanism 42 may be connected to the diversion support 41 to install the diversion jacking mechanism 42 on the diversion support 41.

For example, the diversion jacking mechanism 42 may be arranged to be a structure that can move along the third direction E, where the third direction E may be a vertical direction or a direction close to the vertical direction. For example, the diversion jacking mechanism 42 may include a diversion jacking drive member 421 and a diversion jacking guide member 422, where the diversion jacking drive member 421 may be a drive component such as a pneumatic cylinder, oil cylinder, or electric cylinder, with one end of the diversion jacking drive member 421 fixed to the diversion support 41 and another end fixed to the diversion transport mechanism 43. The diversion jacking guide member 422 may be a structural component with a sliding connection of a guide shaft and a guide sleeve, where the guide shaft may be connected to the diversion support 41, the guide sleeve is connected to the diversion transport mechanism 43, and the guide sleeve may slide with respectto the guide shaft along the third direction E.

In another example, after the trays are placed on the diversion apparatus 4, the original movement direction of the trays needs to be changed through the diversion apparatus 4, so the diversion apparatus 4 may be provided with the diversion transport mechanism 43, and the diversion transport mechanism 43 may support the trays and move to transport the trays to the corresponding positions. The diversion transport mechanism 43 may be connected to another end of the diversion jacking mechanism 42, and during the movement of the diversion jacking mechanism 42, the diversion transport mechanism 43 can be driven to move together, so that the diversion transport mechanism 43 can support the trays. For example, the movement direction of the diversion transport mechanism 43 may be provided to be the first direction C corresponding to the first return circulation line 31.

In another example, as shown in FIG. 2, when the trays are transported by the second return circulation line 32 and approach the diversion apparatus 4, if the transport direction of the trays does not need to be changed, the diversion jacking mechanism 42 in the diversion apparatus 4 does not perform the jacking action, so that the diversion transport mechanism 43 is lower than the second return circulation line 32 along the third direction E, which can allow the second return circulation line 32 to continue transporting the trays along the second direction D. If the transport direction of the trays needs to be changed, when the trays are transported to the upper part of the diversion apparatus 4 along the second return circulation line 32, the diversion jacking mechanism 42 is controlled to perform the jacking action, and the diversion jacking mechanism 42 drives the diversion transport mechanism 43 to move along the third direction E towards the trays until the diversion transport mechanism 43 lifts the trays to separate from the second return circulation line 32. At this point, the diversion transport mechanism 43 is aligned with the first return circulation line 31. Then, the diversion transport mechanism 43 is controlled to move, and when the diversion transport mechanism 43 generates movement along the first direction C, the trays supported on the diversion transport mechanism 43 can move along the first direction C to the first return circulation line 31, thereby completing the diversion of the trays. An included angle between the third direction E and the first direction C may be a right angle or an angle close to a right angle, or may be an included angle of other degrees. The embodiments of this disclosure do not limit thereto.

In the foregoing embodiment, as the diversion apparatus 4 is provided with the diversion support 41, installation positions can be provided for other components in the diversion apparatus 4 through the diversion support 41, and the diversion apparatus 4 can be fixed at a corresponding station through the diversion support 41. Moreover, as the diversion transport mechanism 43 is provided, the original movement direction of the trays can be changed through the diversion transport mechanism 43, so that some trays can be transported to the first return circulation line 31. Meanwhile, as the diversion jacking mechanism 42 is provided between the diversion transport mechanism 43 and the diversion support 41, the diversion transport mechanism 43 can be driven by the diversion jacking mechanism 42 to move, thereby changing a position of the diversion transport mechanism 43 with respect to the second return circulation line, so that the trays that need to be transported along the first return circulation line 31 can be supported on the diversion transport mechanism 43, thereby achieving the diversion of the trays.

In some embodiments, as shown in FIG. 3, the diversion transport mechanism 43 may be configured to include a diversion transport drive component 431 and a diversion frame 432. The diversion frame 432 is installed on the diversion jacking mechanism 42; the diversion transport drive component 431 is installed on the diversion frame 432; and the diversion transport drive component 431 is configured to support the trays and is capable of transporting the trays along the first direction C.

In these embodiments of this disclosure, the diversion frame 432 may be connected to the diversion jacking drive member 421 in the diversion jacking mechanism 42, so that the diversion frame 432 is driven by the diversion jacking drive member 421 to move along the third direction E. The diversion jacking guide member 422 may also be connected to the diversion frame 432.

In these embodiments of this disclosure, the diversion transport drive component 431 may be configured to include a diversion transport drive member and a diversion transport transmission member. The diversion transport drive member is fixed on the diversion support 41, the diversion transport transmission member is installed on the diversion support 41, and the diversion transport drive member is drivably connected with the diversion transport transmission member, so that the diversion transport transmission member is driven by the diversion transport drive member to move.

For example, the diversion transport transmission member may be arranged to be a structure including a pulley and an annular belt or including a chain and a sprocket. For example, the pulley is rotatably provided on the diversion frame 432, with the belt sleeved on the pulley, and the belt extending along the first direction C. In the second direction D, one diversion transport transmission member may be provided at each of two ends of the diversion frame 432. The diversion transport drive member may be a suitable motor such as a servo motor, and the pulley may be drivably connected with the output shaft of the diversion transport drive member through the belt, so that the diversion transport drive member drives the belt in the diversion transport transmission member to rotate, thereby allowing the trays on the belt to move along the first direction C to the first return circulation line 31.

In this embodiment of this disclosure, a diversion cover 44 may also be provided in the diversion apparatus 4, and the diversion cover 44 may be fixed on the diversion frame 432 between the two diversion transport transmission members, so that the diversion jacking mechanism 42, the diversion support 41, the diversion transport drive member, and the like located at the lower part of the diversion apparatus 4 are covered by the diversion cover 44.

In the foregoing embodiment, as the diversion transport mechanism 43 is provided with the diversion frame 432, the diversion transport mechanism 43 may be connected to the diversion jacking mechanism 42 through the diversion frame 432; meanwhile, the diversion frame 432 is provided with the diversion transport drive component 431, and the diversion transport drive component 431 is arranged to be a structure capable of moving along the first direction C, so that under the drive of the diversion jacking mechanism 42, the diversion transport drive component 431 first abuts against the trays that need to be diverted to support the trays on the diversion transport drive component 431, and then transports the trays to the first return circulation line 31 through the diversion transport drive component 431.

In some embodiments, as shown in FIG. 1, the return apparatus may further be provided with a lifting apparatus 5 and a third return circulation line 33. One end of the lifting apparatus 5 is connected to the second end of the diversion apparatus 4 via the first return circulation line 31, and another end of the lifting apparatus 5 is connected to one end of the stacking platform 7 via the third return circulation line 33; the third end of the diversion apparatus 4 is connected to another end of the lifting apparatus 5 via the second return circulation line; the lifting apparatus 5 is configured to transport the trays located on the first return circulation line 31 or the second return circulation line to the third return circulation line 33 according to a scheduling instruction; and along the third direction E, at least a portion of the second return circulation line overlaps with the assembly circulation line 2, and at least another portion of the second return circulation line overlaps with the third return circulation line 33.

In these embodiments of this disclosure, to facilitate the scheduling of multiple trays returning to the stacking platform 7 and to allow different trays to return to the corresponding positions in the stacking platform 7 as needed, the return apparatus may be provided with the lifting apparatus 5, both the first return circulation line 31 and the second return circulation line are connected to the lifting apparatus 5, and then the lifting apparatus 5 is connected to the stacking platform 7, so that both the first return circulation line 31 and the second return circulation line are connected to the stacking platform 7. In this way, the return processes of the trays located on the first return circulation line 31 and the second return circulation line can be respectively controlled by the lifting apparatus 5.

For example, as described in FIG. 1, one end of the first return circulation line 31 far away from the diversion apparatus 4 may be connected to one end of the lifting apparatus 5. One end of the second return circulation line away from the diversion apparatus 4 may be connected to another end of the lifting apparatus 5, and in the third direction E (a direction perpendicular to the paper surface), the first return circulation line 31 and the second return circulation line may be provided at the same height. One end of the third return circulation line 33 may be connected to one end of the second return circulation line connected to the lifting apparatus 5, and the third return circulation line 33 overlaps with the second return circulation line, to be specific, in the third direction E, at least a portion of the structure of the second return circulation line connected to the lifting apparatus 5 is located below the third return circulation line 33. For example, as shown in FIG. 1, the entire second return circulation line may be provided below the assembly circulation line 2 and the third return circulation line 33.

In the foregoing embodiment, as the return apparatus is provided with the lifting apparatus 5, with both the first return circulation line 31 and the second return circulation line connected to the lifting apparatus 5, and the lifting apparatus 5 further connected to the stacking platform 7 via the third return circulation line 33, the scheduling of the return process of the trays located on the first return circulation line 31 and the second return circulation line can be completed through the lifting apparatus 5, so as to control the progress of the return of the trays and the assembled battery modules on the trays to the stacking platform 7, thereby reducing the congestion of the trays and the assembled battery modules on the stacking platform 7 or the return circulation line. Meanwhile, the second return circulation line overlaps with the assembly circulation line 2 and the third return circulation line 33, which can reduce the space occupied by the second return circulation line, thereby reducing the volume of the battery assembly system.

In some embodiments, referring to FIG. 4, FIG. 4 is a schematic structural diagram of a lifting apparatus according to an embodiment of this disclosure. The lifting apparatus 5 may be arranged to be a structure including a lifting support 51, a lifting mechanism 52, and a lifting transport mechanism 53. The lifting mechanism 52 is installed on the lifting support 51; the lifting transport mechanism 53 is installed on the lifting mechanism 52; the lifting mechanism 52 is capable of driving the lifting transport mechanism 53 to move along the third direction E with respect to the lifting support 51; and the lifting transport mechanism 53 is configured to transport the trays to the third return circulation line 33 along a second direction D, the second direction D having an included angle with the third direction E.

In this embodiment of this disclosure, to facilitate the installation of the lifting apparatus 5 and the arrangement and connection of various components in the lifting apparatus 5, the lifting support 51 may be provided, and the lifting support 51 may be arranged to be a frame structure.

In this embodiment of this disclosure, as the lifting apparatus 5 needs to transport the trays located on the first return circulation line 31 and the second return circulation line to the third return circulation line 33, to be specific, needs to move along the third direction E, the lifting apparatus 5 may be provided with the lifting mechanism 52, so that movement along the third direction E is generated through the lifting mechanism 52. One end of the lifting mechanism 52 may be fixedly connected to the lifting support 51, so that the lifting mechanism 52 is installed on the lifting support 51.

In this embodiment of this disclosure, in the process of transporting the trays to the position corresponding to the third return circulation line 33, the lifting apparatus 5 also needs to be able to transport the trays to the third return circulation line 33, so the lifting apparatus 5 may be provided with a third transport mechanism. The lifting transport mechanism 53 may be arranged to be a structure that can move along the second direction D, and the lifting transport mechanism 53 is installed on the lifting mechanism 52, so that the lifting transport mechanism 53 supports the trays and transports the trays to the third return circulation line 33 through the lifting transport mechanism 53. An included angle between the second direction D and the third direction E may be a right angle or an angle close to a right angle, or may be an included angle of other degrees. The embodiments of this disclosure do not limit thereto.

In the foregoing embodiment, as the lifting apparatus 5 is provided with the lifting support 51, installation positions can be provided for various components in the lifting apparatus 5 through the lifting support 51, and the lifting apparatus 5 is installed at a corresponding station through the lifting support 51. In addition, as the lifting apparatus 5 is provided with the lifting mechanism 52 installed on the lifting support 51, movement along the third direction E can be generated through the lifting mechanism 52, so that the trays can be transported through the lifting mechanism 52 to the position corresponding to the third return circulation line 33. Meanwhile, as the lifting mechanism 52 is provided with the lifting transport mechanism 53, the trays corresponding to the third return circulation line 33 can be transported to the third return circulation line 33 through the lifting transport mechanism 53.

In some embodiments, as shown in FIG. 4, the lifting mechanism 52 may be arranged to be a structure including a lifting drive component 521, a lifting guide component 522, and a lifting frame 523. The lifting guide component 522 is installed on the lifting support 51; the lifting frame 523 is installed on the lifting guide component 522; one end of the lifting drive component 521 is connected to the lifting support 51, and another end of the lifting drive component 521 is connected to the lifting frame 523; and under the drive of the lifting drive component 521, the lifting frame 523 can move along the third direction E.

In this embodiment of this disclosure, during the movement of the lifting mechanism 52, the movement direction needs to be limited, so the lifting mechanism 52 may be provided with the lifting guide component 522, and the lifting guide component 522 may be installed on the lifting support 51.

For example, the lifting guide component 522 may use a guide rail and a slider that are slidably connected. For example, the guide rail may be fixedly installed on the lifting support 51, and the guide rail extends along the third direction E. Four parallel lifting guide components 522 may be installed on the lifting support 51.

In this embodiment of this disclosure, to facilitate the installation of the lifting transport mechanism 53, the lifting mechanism 52 may be provided with the lifting frame 523, and the lifting frame 523 may be fixedly connected to the slider in the lifting guide component 522. The lifting frame 523 may move along the third direction E through the lifting guide component 522.

In this embodiment of this disclosure, the lifting mechanism 52 may be provided with the lifting drive component 521, with one end of the lifting drive component 521 fixedly connected to the lifting frame 523 and another end of the lifting drive component 521 connected to the lifting frame 523, so that a driving force is provided through the lifting drive component 521 for the lifting frame 523 to move along the third direction E.

For example, the lifting drive component 521 may be arranged to be a structure including a lifting drive member and a lifting transmission component. For example, the lifting drive member may be a drive member that can generate rectilinear motion, for example, a pneumatic cylinder, oil cylinder, or electric cylinder. The lifting transmission component may be arranged to be a structure of a roller and a transmission belt, where the roller is rotatably provided on the output shaft of the lifting drive member, and an axial direction of the roller is perpendicular to an axial direction of the output shaft of the drive member, one end of the transmission belt is fixedly connected to the lifting support 51, another end of the transmission belt is fixedly connected to the lifting frame 523, the middle portion of the transmission belt overlaps on the roller, and two ends of the transmission belt are located on two sides of the rollers, respectively. In this way, when the lifting drive member generates movement along the third direction E, the roller pushes the transmission belt to move, so the transmission belt on one side of the roller rotates around the roller to the other side of the roller, meaning that one end of the transmission belt connected to the lifting frame 523 can move along the third direction E, so as to drive the lifting frame 523 to move along the third direction E. With this structural arrangement, during the movement of the lifting drive member along the third direction E for a first distance, the lifting frame 523 can move along the third direction E for twice the first distance, thereby increasing the movement speed of the lifting frame 523.

In the foregoing embodiment, as the lifting mechanism 52 is provided with the lifting guide component 522, the movement direction of the lifting frame 523 can be limited through the lifting guide component 522, and installation positions can be provided for the lifting transport mechanism 53 through the lifting frame 523 to install the lifting transport mechanism 53 on the lifting mechanism 52. Meanwhile, the lifting drive component 521 is provided between the lifting support 51 and the lifting frame 523, so that a driving force can be provided for the lifting frame 523 through the lifting drive component 521 to drive the lifting frame 523 to move along the third direction E.

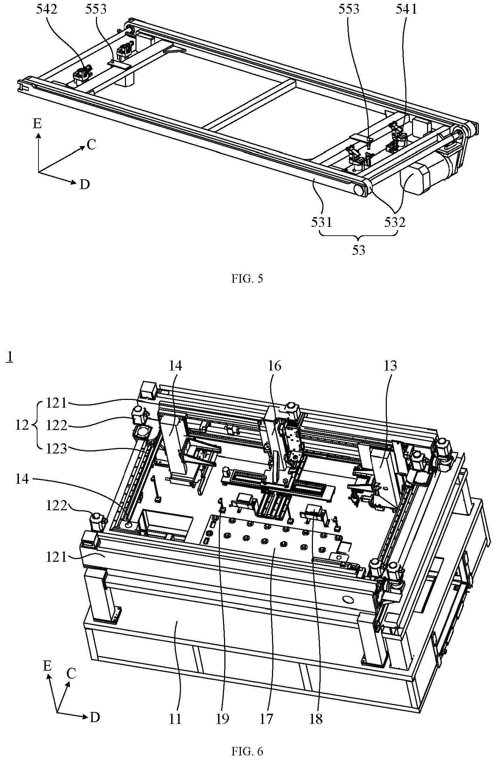

In some embodiments, referring to FIG. 5, FIG. 5 is a schematic structural diagram of some mechanisms in the lifting apparatus according to an embodiment of this disclosure. As shown in FIG. 5, the lifting transport mechanism 53 includes a lifting transport frame 531 and a lifting transport drive component 532. The lifting transport frame 531 is installed on the lifting frame 523; the lifting transport drive component 532 is installed on the lifting transport frame 531; and the lifting transport drive component 532 is configured to support the trays and is capable of transporting the trays to the third return circulation line 33 along the second direction D.

In this embodiment of this disclosure, the lifting transport frame 531 may be installed on the lifting frame 523, and during the movement of the lifting frame 523 along the third direction E, the lifting transport frame 531 may be driven to move together.

In this embodiment of this disclosure, the lifting transport drive component 532 may be arranged to be a structure including a lifting transport drive member and a lifting transport transmission member. The lifting transport drive member is fixed on the lifting transport frame 531, the lifting transport transmission member is installed on the lifting transport frame 531, and the lifting transport drive member is drivably connected with the lifting transport transmission member to drive the lifting transport transmission member through the lifting transport drive member to move along the second direction D.

For example, the lifting transport transmission member may be arranged to be a structure including a pulley and an annular belt or including a chain and a sprocket. For example, the pulley may be rotatably provided on the lifting transport frame 531, with the belt sleeved on two pulleys, and the belt extending along the second direction D. In the first direction C, one lifting transport transmission member may be provided at each of two ends of the lifting transport frame 531. The lifting transport drive member may be a suitable motor such as a servo motor, and the pulley may be drivably connected with the output shaft of the lifting transport drive member through the belt, so that the lifting transport drive member drives the belt in the lifting transport transmission member to rotate, thereby allowing the trays on the belt to move along the second direction D to the third return circulation line 33.

In the foregoing embodiment, as the lifting transport mechanism 53 is provided with the lifting transport frame 531, the lifting transport mechanism 53 may be connected to the lifting frame 523 through the lifting transport frame 531, so that the lifting transport mechanism 53 is connected to the lifting mechanism 52. Meanwhile, the lifting transport frame 531 is provided with the lifting transport drive component 532, and the lifting transport drive component 532 is arranged to be a structure capable of moving along the second direction D, so that under the drive of the lifting mechanism 52, the lifting transport drive component 532 can transport the trays to a position corresponding to the third return circulation line 33, and then can transport the trays to the third return circulation line 33 through the lifting transport drive component 532.

In some embodiments, as shown in FIG. 4 and FIG. 5, the lifting apparatus 5 further includes a lifting limit mechanism 54. In the second direction D, the lifting limit mechanism 54 is provided at each of two ends of the lifting transport frame 531, and the lifting limit mechanism 54 is capable of moving along the third direction E to limit movement of the trays with respect to the lifting transport mechanism 53 along the second direction D.

In this embodiment of this disclosure, in the process of transporting the single-row module trays to the lifting transport mechanism 53 through the first return circulation line 31 or the double-row module trays to the lifting transport mechanism 53 through the second return circulation line, the trays need to stop at a fixed position with respectto the lifting transport mechanism 53, so the lifting limit mechanism 54 can be provided on the lifting transport frame 531, and during the movement of the trays on the lifting transport mechanism 53 along the second direction D, the movement of the trays can be limited through the lifting limit mechanism 54.

For example, in the second direction D, at least one lifting limit mechanism 54 may be provided at each end of the lifting transport frame 531, and the lifting limit mechanism 54 can move along the third direction E. In this way, during the process of the trays moving to the lifting transport mechanism 53, the lifting limit mechanism 54 can move along the third direction E towards the trays, so that the trays can abut against the lifting limit mechanism 54 to limit the position of the trays. In the process of transporting the trays from the lifting transport mechanism 53 to the third return circulation line 33, the lifting limit mechanism 54 can move along the third direction E in the opposite direction away from the trays to release the restriction on the movement of the trays, allowing the trays to move along the third direction E.

In another example, the lifting limit mechanism 54 may be arranged to be a structure including a lifting limit drive member and a lifting limit member. The lifting limit drive member may be a drive member such as a pneumatic cylinder, oil cylinder, or electric cylinder, and the lifting limit member may be a structural member such as a limit block, with the lifting limit member installed on the output shaft of the lifting limit drive member to drive the lifting limit member through the lifting limit drive member to move along the third direction E.

In another example, as shown in FIG. 5, in the second direction D, two first lifting limit mechanisms 541 may be provided at one end of the lifting transport frame 531, so that the trays moving from the second return circulation line to the lifting transport mechanism 53 can be limited through the first lifting limit mechanisms 541. In the second direction D, two second lifting limit mechanisms 542 may also be provided at another end of the lifting transport frame 531, so that the trays moving from the first return circulation line 31 to the lifting transport mechanism 53 can be limited through the second lifting limit mechanisms 542.

In the foregoing embodiment, as the lifting apparatus 5 is provided with the lifting limit mechanism 54, the movement position of the trays on the lifting transport mechanism 53 can be limited through the lifting limit mechanism 54, so that the trays can stop at a determined position on the lifting transport mechanism 53, so as to reduce the risk of the trays rushing out from the lifting transport mechanism 53.

In some embodiments, as shown in FIG. 4 and FIG. 5, the lifting apparatus 5 further includes a lifting detection member 55. In the second direction D, the lifting detection member 55 is provided at each of two ends of the lifting apparatus 5, and the lifting detection member 55 is configured to detect a movement state of the trays.

In this embodiment of this disclosure, as shown in FIG. 4, in the second direction D, one set of first lifting detection members 551 may be provided at each of two ends of the lifting support 51. One set of first lifting detection members 551 are located on the movement path of the trays moving from the first return circulation line 31 to the lifting transport mechanism 53, and the other set of first lifting detection members 551 are located on the movement path of the trays moving from the second return circulation line to the lifting transport mechanism 53. The first lifting detection member 551 may use a through-beam laser sensor. In this way, the first lifting detection member 551 can detect whether there are trays being transported to the lifting transport mechanism 53.

In this embodiment of this disclosure, as shown in FIG. 4, in the second direction D, a second lifting detection member 552 may also be provided on the lifting support 51 close to the position of the third return circulation line 33. The second lifting detection member 552 may use a through-beam laser sensor. In this way, during the process of the trays moving from the lifting transport mechanism 53 to the third return circulation line 33, the second lifting detection member 552 can detect whether the trays have been transported out from the lifting transport mechanism 53.

In this embodiment of this disclosure, as shown in FIG. 5, in the second direction D, a third lifting detection member 553 may also be provided at each of two ends of the lifting transport frame 531, and the third lifting detection member 553 can detect whether the trays have moved to the desired position on the lifting transport mechanism 53. For example, the third lifting detection member 553 may use a proximity sensor, and the third lifting detection member 553 can determine that the trays have moved into place.

In the foregoing embodiment, as the lifting apparatus 5 is provided with the lifting detection member 55, the lifting detection member 55 may be used to detect the movement state of the trays on the lifting transport mechanism 53, for example, detecting whether the trays are in place, or detecting whether the trays are moving to the lifting transport mechanism 53, or detecting whether the trays have been separated from the lifting transport mechanism 53, so that the next movement action to be executed by the lifting apparatus 5 may be controlled based on the detected movement state of the trays.

In some embodiments, referring to FIG. 6, FIG. 6 is a schematic structural diagram of a pressurizing apparatus according to an embodiment of this disclosure. As shown in FIG. 1 and FIG. 6, the assembly apparatus includes a pressurizing apparatus 1, and the pressurizing apparatus 1 includes a pressurizing support 11 and a pressurizing mechanism 13. The pressurizing support 11 is provided at a position corresponding to the assembly circulation line 2, the pressurizing mechanism 13 is installed on the pressurizing support 11, the pressurizing mechanism 13 is configured to apply a pressing force to the to-be-assembled battery modules, and the assembly circulation line 2 is capable of transporting trays carrying the to-be-assembled battery modules to a position corresponding to the pressurizing mechanism 13 in the pressurizing apparatus 1.

In this embodiment of this disclosure, the battery assembly system may be provided with the pressurizing apparatus 1, so that the corresponding assembly process is provided for the to-be-assembled battery modules through the pressurizing apparatus 1.

In this embodiment of this disclosure, the pressurizing apparatus 1 may be provided with the pressurizing support 11, so that installation positions are provided for other components in the pressurizing apparatus 1 through the pressurizing support 11, and the pressurizing apparatus 1 is installed at a station corresponding to the assembly circulation line 2. In this way, the to-be-assembled battery modules can be transported to the position of the pressurizing mechanism 13 in the pressurizing apparatus 1 through the assembly circulation line 2.

In this embodiment of this disclosure, the pressurizing apparatus 1 may be provided with the pressurizing mechanism 13. For example, the pressurizing mechanism 13 may be arranged to be a structure that can move along the second direction D, so that a pressing force is applied to the to-be-assembled battery modules through the pressurizing mechanism 13, allowing the to-be-assembled battery modules to reach the preset length or to reach the preset pressurizing state.

In the foregoing embodiment, as the assembly apparatus is provided with the pressurizing apparatus 1, and the pressurizing apparatus 1 is arranged to be a structure including the pressurizing support 11 and the pressurizing mechanism 13, installation positions may be provided for other components in the pressurizing apparatus 1 through the pressurizing support 11, the pressurizing apparatus 1 is installed at a corresponding station, and a pressing force may be applied to the to-be-assembled battery modules through the pressurizing mechanism 13, so that the battery modules reach the desired structural state.

In some embodiments, as shown in FIG. 6, the pressurizing apparatus 1 may be arranged to be a structure further including a pressurizing movable mechanism 12, and the pressurizing movable mechanism 12 is movably provided on the pressurizing support 11 and is capable of moving along the first direction C with respect to the pressurizing support 11.

In this embodiment of this disclosure, as the pressurizing mechanism 13 and other mechanisms in the pressurizing apparatus 1 need to move with respect to the pressurizing support 11 to avoid the to-be-assembled battery modules transported from the assembly circulation line 2 to the pressurizing apparatus 1, the pressurizing apparatus 1 may be provided with the pressurizing movable mechanism 12, and the pressurizing movable mechanism 12 is movably provided on the pressurizing support 11.

For example, as shown in FIG. 6, the pressurizing movable mechanism 12 may be arranged to be a structure including a movable support 121, a movement drive component 122, and a movement guide component 123.

For example, the movable support 121 may be arranged to be a structure extending along the second direction D, meaning that the extension direction of the movable support 121 is consistent with the transport direction of the trays in the pressurizing apparatus 1. The movement guide component 123 may be arranged to be a structure including a guide rail and a slider that are slide-connected, with the guide rail fixed on the pressurizing support 11 and the guide rail extending along the first direction C, and the movable support 121 may be fixed on the slider, so that the movable support 121 can move along the first direction C with respect to the pressurizing support 11. The movement drive component 122 may be arranged to be a structure including a drive member and a transmission component. The drive member may be a motor such as a servo motor, and the drive member is fixedly installed on the movable support 121. The transmission component may be arranged to be a structure including a gear and a rack that are engaged with each other, where the gear is connected to an output shaft of the servo motor, the rack is fixed on the movable support 121, and the rack also extends along the first direction C. In this way, during the rotation of the gear driven by the servo motor, the gear moves along an extension direction of the rack, which can drive the movable support 121 to move along the first direction C.

In another example, as shown in FIG. 6, two pressurizing movable mechanisms 12 may be provided on the pressurizing support 11 along the first direction C. The two pressurizing movable mechanisms 12 may share the same guide rail and rack. In this way, other mechanisms can be provided on each of the two pressurizing movable mechanisms 12.

In the foregoing embodiment, as the pressurizing support 11 of the pressurizing apparatus 1 is movably provided with the pressurizing movable mechanism 12, and the pressurizing movable mechanism 12 may move along the first direction C with respect to the pressurizing support 11, installation points can be provided for other mechanisms such as the pressurizing mechanism 13 through the pressurizing movable mechanism 12; and other mechanisms such as the pressurizing mechanism 13 provided on the pressurizing movable mechanism 12 can be driven through the pressurizing movable mechanism 12 to move along the first direction C, so that in the process of transporting the to-be-assembled battery modules from the assembly circulation line 2 to the pressurizing apparatus 1, the to-be-assembled battery modules can be avoided, and after the to-be-assembled battery modules are in place in the pressurizing apparatus 1, other mechanisms such as the pressurizing mechanism 13 can be driven through the pressurizing movable mechanism 12 to move towards the to-be-assembled battery modules.

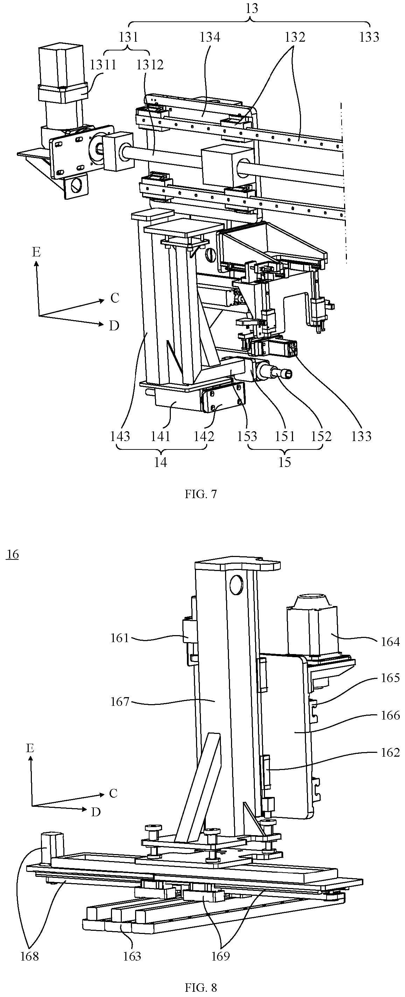

In some embodiments, referring to FIG. 7, FIG. 7 is a first schematic structural diagram of some mechanisms in the pressurizing apparatus according to an embodiment of this disclosure. As shown in FIG. 7, the pressurizing mechanism 13 may be arranged to be a structure including a pressurizing drive component 131, a pressurizing guide component 132, and a pressurizing member 133. The pressurizing guide component 132 is connected to the pressurizing movable mechanism 12 and extends along the second direction D; the pressurizing member 133 is installed on the pressurizing guide component 132; one end of the pressurizing drive component 131 is connected to the pressurizing movable mechanism 12, and another end of the pressurizing drive component 131 is connected to the pressurizing member 133; and under the drive of the pressurizing drive component 131, the pressurizing member 133 is capable of moving along the second direction D to abut against or separate from the to-be-assembled battery modules, the first direction C having an included angle with the second direction D.

In this embodiment of this disclosure, the pressurizing mechanism 13 needs to apply pressure to the to-be-assembled battery modules along the second direction D to press and compress the to-be-assembled battery modules to the required length.

For example, as shown in FIG. 7, the pressurizing mechanism 13 may be arranged to be a structure including a pressurizing member 133, a pressurizing guide component 132 that drives the pressurizing member 133 to move, and a pressurizing drive component 131 that provides a driving force to the pressurizing guide component 132. For example, the pressurizing member 133 may be arranged to be a columnar cuboid, and the structure of the pressurizing member 133 matches a pressurizing surface of the to-be-assembled battery modules. A pressure sensor may be provided on the pressurizing member 133, so that the pressure applied by the pressurizing member 133 to the to-be-assembled battery modules may be detected through the pressure sensor. To facilitate connection, a pressurizing connection member 134 may be provided, and the pressurizing member 133 is fixed at one end of the pressurizing connection member 134. The pressurizing guide component 132 may be arranged to be a structure including a guide rail and a slider that are slide-connected, where the guide rail is fixedly installed on the movable support 121, and the guide rail extends along the second direction D; and the slider is fixedly installed on another end of the pressurizing connection member 134, so that the pressurizing connection member 134 can move along the second direction D through the slider and the guide rail. The pressurizing drive component 131 may be arranged to be a structure including a drive member and a transmission component. The drive member may be a motor such as a servo motor, and the drive member is fixedly installed on the movable support 121. The transmission component may be arranged to be a structure including a ball screw, where a screw in the ball screw is connected to the output shaft of the drive member, and a nut block in the ball screw is connected to the pressurizing connection member 134 to connect the nut block and the pressurizing member 133. In this way, during the rotation of the drive member, the screw can be driven to rotate, and during the rotation of the screw, the nut block can drive the pressurizing connection member 134 and the pressurizing member 133 to move along the second direction D.

In another example, an extension direction of the pressurizing guide component 132 and the extension direction of the moving guide component 123 may be arranged to be perpendicular to each other, meaning that the second direction D and the first direction C are perpendicular to each other, and the included angle between the first direction C and the second direction D may alternatively be arranged to other angles. The embodiments of this disclosure do not limit thereto.

In the foregoing embodiment, as the pressurizing mechanism 13 is provided with the pressurizing guide component 132 extending along the second direction D, the pressurizing member 133 may be connected to the pressurizing guide component 132, and the pressurizing member 133 can move along the second direction D through the pressurizing guide component 132. As the pressurizing mechanism 13 is provided with the pressurizing drive component 131 connected to the pressurizing movable mechanism 12 and the pressurizing member 133, a driving force can be provided for the pressurizing member 133 through the pressurizing drive component 131, so that the pressurizing member 133 can reciprocate along the second direction D through the pressurizing guide component 132, thereby allowing the pressurizing member 133 to abut against or separate from the to-be-assembled battery modules, and further providing pressing force along the second direction d to the to-be-assembled battery modules to press and compress the to-be-assembled battery modules.

In some embodiments, as shown in FIG. 6 and FIG. 7, the pressurizing apparatus 1 may be further provided with a pressurizing lateral limit mechanism 14, and the pressurizing lateral limit mechanism 14 includes a pressurizing lateral limit drive member 141 and a pressurizing lateral limit member 142. The pressurizing lateral limit drive member 141 is connected to the pressurizing movable mechanism 12; the pressurizing lateral limit member 142 is installed on the pressurizing lateral limit drive member 141; and under the drive of the pressurizing lateral limit drive member 141, the pressurizing lateral limit member 142 is capable of moving along the second direction D to abut against or separate from the trays.

In this embodiment of this disclosure, after the trays carrying the to-be-assembled battery modules move to the pressurizing apparatus 1, the trays need to be limited from multiple directions so that the trays are in a fixed position with respect to the pressurizing apparatus 1. In this case, the pressurizing apparatus 1 may be provided with the pressurizing lateral limit mechanism 14.

For example, as shown in FIG. 7, the pressurizing lateral limit mechanism 14 may be arranged to be a structure including a pressurizing lateral limit drive member 141 and a pressurizing lateral limit member 142. For example, the pressurizing lateral limit drive member 141 may be a drive member that can move linearly along the second direction D, for example, an electric cylinder, a pneumatic cylinder, or an oil cylinder. The pressurizing lateral limit member 142 may be arranged to be a plate structure that matches a side of the trays or other structures, and the pressurizing lateral limit member 142 may be connected to an output shaft of the pressurizing lateral limit drive member 141. To facilitate the installation of the pressurizing lateral limit mechanism 14, the lateral connection member 143 can be provided, with one end of the lateral connection member 143 fixedly connected to the movable support 121 in the pressurizing movable mechanism 12, and the pressurizing lateral limit drive member 141 fixed to another end of the lateral connection member 143, to connect the pressurizing lateral limit drive member 141 to the pressurizing movable mechanism 12.

In another example, as shown in FIG. 6, along the second direction D, one pressurizing lateral limit mechanism 14 may be provided at each of two ends of the movable support 121 in the pressurizing movable mechanism 12. In this way, the trays can be limited from two ends of the trays along the second direction D, so that the trays are limited at a determined position along the second direction D.

In the foregoing embodiment, as the pressurizing movable mechanism 12 is provided with the pressurizing lateral limit drive member 141, and an output shaft of the pressurizing lateral limit drive member 141 is provided with the pressurizing lateral limit member 142, the pressurizing lateral limit mechanism 14 can be driven through the pressurizing movable mechanism 12 to move to a position corresponding to one side of the trays, and then the pressurizing lateral limit member 142 can be driven through the pressurizing lateral limit drive member 141 to move along the second direction D, so that the pressurizing lateral limit member 142 can abut against or separate from one side of the trays, thereby limiting the trays along the second direction D.

In some embodiments, as shown in FIG. 7, the pressurizing apparatus 1 may be further provided with a tightening mechanism 15, and the tightening mechanism 15 includes a tightening drive member 151 and a tightening member 152. The tightening drive member 151 is connected to the pressurizing movable mechanism 12; the tightening member 152 is connected to the tightening drive member 151; and under the drive of the tightening drive member 151, the tightening member 152 is capable of moving along the second direction D so that the tightening member 152 is connected to an adjustment member on the trays, and the tightening member 152 is configured to drive the adjustment member to move so that pressure-holding components on the trays are driven through the adjustment member to abut against the assembled battery modules.

In this embodiment of this disclosure, after the pressurizing mechanism 13 applies pressure to the to-be-assembled battery modules along the second direction D, that is, after the to-be-assembled battery modules are pressed and compressed to the required length, the pressure-holding components on the trays can be abutted against the assembled battery modules, so that the assembled battery modules are kept in the pressed state through the pressure-holding components. In this case, the pressurizing apparatus 1 may be provided with the tightening mechanism 15 adapted to the adjustment member on the trays.

For example, as shown in FIG. 7, the tightening mechanism 15 may be arranged to be a structure including a tightening drive member 151 and a tightening member 152. For example, the tightening drive member 151 may be a drive member that can move linearly along the second direction D, for example, an electric cylinder, a pneumatic cylinder, or an oil cylinder, and the tightening drive member 151 may be fixedly installed on the movable support 121 in the pressurizing movable mechanism 12. The tightening member 152 may be a tightening gun or the like, and the tightening member 152 is fixed on a movable part of the tightening drive member 151, so that the tightening member 152 is driven by the tightening drive member 151 to move along the second direction D, and the tightening member 152 is connected to the adjustment member on the trays. The adjustment member on the trays may be a structural member such as a screw, and the screw can be driven through the tightening member 152 to rotate, so that the pressure-holding components connected to the screw move to abut against the assembled battery modules.

In another example, to facilitate the installation of the tightening mechanism 15, a tightening connection member 153 may be provided, with one end of the tightening connection member 153 connected to the movable support 121, and the tightening drive member 151 fixed to another end of the tightening connection member 153.

In the foregoing technological means, as the pressurizing apparatus 1 is provided with the tightening mechanism 15, and the tightening mechanism 15 is arranged to include the connected tightening drive member 151 and tightening member 152, the tightening member 152 can be driven by the tightening drive member 151 to move along the second direction D, so that the tightening member 152 is connected to an adjustment member in the trays; and the adjustment member can be driven through the tightening member 152 to rotate, so that pressure-holding components in the trays are driven through the adjustment member to move, the pressure-holding components can abut against the assembled battery modules, and the assembled battery modules are kept in the pressed state through the pressure-holding components.

In some embodiments, referring to FIG. 8, FIG. 8 is a schematic structural diagram of a pole limit mechanism 16 in the pressurizing apparatus according to an embodiment of this disclosure. As shown in FIG. 6 and FIG. 8, the pressurizing apparatus 1 may be further provided with a pole limit mechanism 16, and the pole limit mechanism 16 includes a pole vertical drive component 161, a pole vertical guide component 162, and a pole limit member 163. The pole vertical guide component 162 is installed on the pressurizing movable mechanism 12 and extends along the third direction E; the pole limit member 163 is installed on the pole vertical guide component 162; one end of the pole vertical drive component 161 is connected to the pressurizing movable mechanism 12, and another end of the pole vertical drive component 161 is connected to the pole limit member 163; and under the drive of the pole vertical drive component 161, the pole limit member 163 is capable of moving along the third direction E to abut against or separate from the to-be-assembled battery modules, the third direction E having an included angle with the first direction C.

In this embodiment of this disclosure, before the pressure is applied to the to-be-assembled battery modules along the second direction D, to avoid deformation or movement of the poles on the to-be-assembled battery modules under the condition that the to-be-assembled battery modules are squeezed, the pressurizing apparatus 1 may be provided with the pole limit mechanism 16.

For example, as shown in FIG. 8, the pole limit mechanism 16 may be arranged to be a structure including a pole limit member 163, a pole vertical guide component 162, and a pole vertical drive component 161. For example, the pole limit member 163 may be arranged to be a long plate-shaped structure to abut against the poles on the to-be-assembled battery modules through the pole limit member 163. The pole vertical guide component 162 may be arranged to be a structure including a guide rail and a slider that are slide-connected, where the slider may be connected to the movable support 121, and the pole limit member 163 is connected to the guide rail. The pole vertical drive component 161 may be arranged to be a structure including a drive member that can move linearly along the third direction E, for example, an electric cylinder, a pneumatic cylinder, or an oil cylinder, with one end of the drive member connected to the slider in the pole vertical guide component 162 and another end of the drive member connected to the pole limit member 163. To facilitate the installation of the base limit mechanism, a limit support 167 may be provided, with the guide rail in the pole vertical guide component 162 installed on the limit support 167, the pole limit member 163 installed on the limit support 167, and another end of the drive member in the pole vertical drive component 161 connected to the limit support 167.

In the foregoing embodiment, as the pressurizing apparatus 1 is provided with the pole limit mechanism 16, the pole limit member 163 can be driven to move along the third direction E by the pole vertical drive component 161 in the pole limit mechanism 16 to allow the pole limit member 163 to abut against poles on the to-be-assembled battery modules, thereby limiting the movement of the poles and reducing the deformation of the poles during the compression process of the to-be-assembled battery modules.

In some embodiments, as shown in FIG. 8, the pole limit mechanism 16 further includes a pole lateral drive component 164 and a pole lateral guide component 165. The pole lateral guide component 165 is connected to the pressurizing movable mechanism 12; one end of the pole lateral drive component 164 is connected to the pressurizing movable mechanism 12, and another end of the pole lateral drive component 164 is connected to the pole lateral guide component 165; the pole vertical guide component 162 is connected to the pole lateral guide component 165; the pole vertical drive component 161 is provided on the pole lateral guide component 165; and under the drive of the pole lateral drive component 164, the pole vertical guide component 162 is capable of moving along the second direction D to drive the pole limit member 163 to move along the second direction D.

In this embodiment of this disclosure, when the poles on the to-be-assembled battery modules limited by the pole limit mechanism 16 move, for different to-be-assembled battery modules or different to-be-assembled battery modules with placement different positions on the trays, the position of the pole limit mechanism 16 with respect to the pressurizing support 11 in the second direction D needs to be adjusted. In this case, the pole lateral drive component 164 and the pole lateral guide component 165 may be provided in the pole limit mechanism 16 to drive the pole limit member 163 to move along the second direction D.

For example, the pole lateral guide component 165 may be arranged to be a structure including a guide rail and a slider that are slide-connected. For example, the guide rail is fixed on the movable support 121 in the pressurizing movable mechanism 12, and the guide rail extends along the second direction D; and the slider in the pole vertical guide component 162 is fixedly connected to the slider in the pole lateral guide component 165. To facilitate installation, a pole limit connection member 166 may be provided, with the slider in the pole vertical guide component 162 fixed on a side of the pole limit connection member 166, and the slider in the pole lateral guide component 165 fixed on another side of the pole limit connection member 166, and the pole vertical drive component 161 may also be installed on a side of the pole limit connection member 166. The pole lateral drive component 164 may be arranged to be a structure including a drive member and a transmission component. The drive member may be a motor such as a servo motor, and the drive member is fixedly installed on the pole limit connection member 166. The transmission component may be arranged to be a structure including a gear and a rack that are engaged with each other, where the gear is connected to an output shaft of the servo motor, the rack is fixed on the movable support 121, and the rack extends along the second direction D. In this way, during the rotation of the gear driven by the servo motor, the gear moves along the extension direction of the rack, which can drive the pole limit mechanism 16 to move along the second direction D.

In the foregoing embodiment, as the pole limit mechanism 16 is provided with the pole lateral drive component 164 and the pole lateral guide component 165, and the pole lateral guide component 165 is arranged to be a structure extending along the second direction D, the pole vertical guide component 162 can be driven by the pole lateral drive component 164 to move along the second direction D, so as to drive the pole limit member 163 to move along the second direction D as well, so that the position of the pole limit member 163 along the second direction D can be adjusted, and thus the pole limit mechanism 16 corresponds to positions of poles of different types of to-be-assembled battery modules, so as to improve the applicability of the pressurizing apparatus 1.

In some embodiments, as shown in FIG. 8, the pole limit mechanism 16 may be further provided with an adjustment drive component 168 and an adjustment guide component 169, so that the position of the pole limit member 163 on the pole limit mechanism 16 is adjusted through the adjustment drive component 168 and the adjustment guide component 169.

For example, the adjustment guide component 169 may be arranged to be a structure including a guide rail and a slider that are slide-connected, where the guide rail is fixed on the limit support 167, the guide rail extends along the second direction D, and the pole limit member 163 is fixed on the slider.

In another example, the adjustment drive component 168 may be arranged to be a structure including a drive member and a transmission component. For example, the drive member may be a motor such as a servo motor, and the drive member is fixedly connected to the guide rail in the adjustment guide component 169. The transmission component may use a pulley and an annular belt that are matched, with the pulley connected to an output shaft of the servo motor, and the slider in the adjustment guide component 169 fixedly connected to the belt. During the rotation of the pulley driven by the servo motor, the belt can move along the second direction D, which can drive the pole limit member 163 to move along the second direction D.

In the foregoing embodiment, as the pole limit mechanism 16 is provided with the adjustment drive component 168 and the adjustment guide component 169, the position of the pole limit member 163 in the pole limit pole along the second direction D can be adjusted through the adjustment drive component 168 and the adjustment guide component 169. Thus, the position of the pole limit member 163 along the second direction D with respect to the pressurizing support 11 can be adjusted in more ways, and the use of the pressurizing apparatus 1 can be more flexible, which is conducive to improving the applicability of the pressurizing apparatus 1.

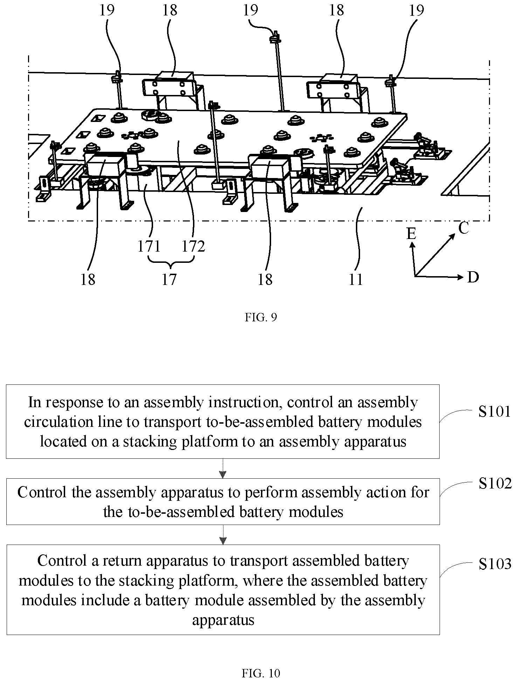

In some embodiments, referring to FIG. 9, FIG. 9 is a second schematic structural diagram of some mechanisms in the pressurizing apparatus according to an embodiment of this disclosure. As shown in FIG. 6 and FIG. 9, the pressurizing apparatus 1 may be further provided with a pressurizing jacking mechanism 17 and a pressurizing longitudinal limit mechanism 18. The pressurizing jacking mechanism 17 is installed on the pressurizing support 11, and the pressurizing jacking mechanism 17 is configured to support the trays and is capable of driving the trays to move along the third direction E; and the pressurizing longitudinal limit mechanism 18 is installed on the pressurizing support 11 and is capable of moving along the first direction C to abut against or separate from the trays.

In this embodiment of this disclosure, after the trays are transported to the pressurizing apparatus 1, the trays may be separated from the transport structure to facilitate the fixation of the trays. The pressurizing apparatus 1 may be provided with the pressurizing jacking mechanism 17.

For example, the pressurizing jacking mechanism 17 may be arranged to be a structure including a pressurizing jacking drive member 171 and a jacking bracket 172. For example, the pressurizing jacking drive member 171 may be a drive member that can move linearly along the third direction E, for example, an electric cylinder, a pneumatic cylinder, or an oil cylinder, and one end of the pressurizing jacking drive member 171 may be fixed on the pressurizing support 11. The jacking bracket 172 may be arranged to be a structure including a jacking plate and rolling wheels, with the multiple rolling wheels installed on a side of the jacking plate close to the pressurizing mechanism 13, and the trays can move along the second direction D on the jacking bracket 172 through the rolling wheels; and the jacking plate is connected to another end of the pressurizing jacking drive member 171. During the movement of the pressurizing jacking drive member 171, the jacking plate can be driven to move along the third direction E.

In another example, to limit the movement of the trays with respect to the pressurizing apparatus 1 along the first direction C, the pressurizing apparatus 1 may be provided with multiple pressurizing longitudinal limit mechanisms 18. For example, the pressurizing longitudinal limit mechanism 18 may be arranged to be a structure including a pressurizing longitudinal limit drive member and a pressurizing longitudinal limit member. The pressurizing longitudinal limit drive member may be a drive member that can move linearly along the first direction C, for example, an electric cylinder, a pneumatic cylinder, or an oil cylinder, and the pressurizing longitudinal limit drive member is fixed on the pressurizing support 11. The pressurizing longitudinal limit member may be arranged to be a plate structure that matches the side of the trays or other structures, and the pressurizing longitudinal limit member may be connected to an output shaft of the pressurizing longitudinal limit drive member. The pressurizing longitudinal limit member can be driven by the pressurizing longitudinal limit drive member to move along the first direction C. In the first direction C, the pressurizing longitudinal limit mechanisms 18 may be provided on each of two sides of the pressurizing jacking mechanism 17, and the pressurizing longitudinal limit member can be driven by the pressurizing longitudinal limit drive members to move along the first direction C, which can limit the trays from the two sides in the first direction C.

In another example, as shown in FIG. 9, the pressurizing apparatus 1 may be further provided with a pressurizing position detection member 19, where the pressurizing position detection member 19 may be a through-beam laser sensor, and the pressurizing position detection member 19 is provided on the pressurizing support 11 at a position corresponding to the position of the to-be-assembled battery modules. The pressurizing position detection member 19 may be used to detect whether the to-be-assembled battery modules carried on the trays are in the preset position.

In the foregoing embodiment, as the pressurizing apparatus 1 is provided with the pressurizing jacking mechanism 17, the trays can be jacked to a specific height through the pressurizing jacking mechanism 17, so that the to-be-assembled battery modules carried on the trays are in a preset height position. Moreover, as the pressurizing apparatus 1 is provided with the pressurizing longitudinal limit mechanism 18, the position of the trays with respect to the pressurizing apparatus 1 along the first direction C can be limited through the pressurizing longitudinal limit mechanism 18, so that the trays and the to-be-assembled battery modules are in fixed positions along the first direction C.

In some embodiments, as shown in FIG. 1, the assembly apparatus further includes an installation apparatus 81 and a shaping apparatus. The installation apparatus 81 is provided at a position corresponding to the assembly circulation line 2 and is located on a side of the pressurizing apparatus 1 close to the stacking platform 7, and the installation apparatus 81 is configured to install to-be-assembled parts on the to-be-assembled battery modules; and the shaping apparatus is provided at a position corresponding to the assembly circulation line 2 and is located on a side of the pressurizing apparatus 1 far away from the stacking platform 7, and the shaping apparatus is configured to provide shaping components on the pressurized battery modules to maintain existing shapes of the pressurized battery modules through the shaping components.

In this embodiment of this disclosure, the battery assembly system may be further provided with the installation apparatus 81. The installation apparatus 81 may be provided on the assembly circulation line 2 between the stacking platform 7 and the pressurizing apparatus 1. End plates may be installed on the battery modules through the installation apparatus 81, so as to form a basic frame for fixing, accommodating and protecting multiple battery cells in the battery modules through the end plates.

In this embodiment of this disclosure, the shaping apparatus may be further provided in the battery assembly system. Through the shaping apparatus, shaping components are installed on the pressurized battery modules that have undergone pressurization treatment, so that the pressurized battery modules maintain their existing shapes.

For example, a first shaping apparatus 82 may be provided on the assembly circulation line 2 on a side of the pressurizing apparatus 1 far away from the stacking platform 7. The first shaping apparatus 82 may be an apparatus for installing steel belts on the pressurized battery modules. The steel belt may be sleeved on the pressurized battery module. The battery module may be fixed by the steel belt, so that the battery cells in the pressurized battery module maintain their existing tightness, so as to resist the expansion force of the battery cells and reduce the impact of vibration on the battery modules.

In another example, a second shaping apparatus 83 may be provided at a position on the assembly circulation line 2 close to the first shaping apparatus 82, and the second shaping apparatus 83 may be an apparatus for installing binding bands on the pressurized battery modules. For example, multiple wires in the battery module may be tied together using binding bands. Other structural parts may also be installed on the battery modules through the second shaping apparatus 83. The embodiments of this disclosure do not limit thereto.

In another example, a reserved station 84 may be provided on the assembly circulation line 2, so that a required apparatus may be added according to the production needs.

In the foregoing embodiment, as the assembly apparatus is provided with the installation apparatus 81, required parts can be installed onto the to-be-assembled battery modules through the installation apparatus 81; meanwhile, as the assembly apparatus is provided with the shaping apparatus, shaping components can be provided on the pressurized battery modules after being pressurized by the pressurizing apparatus 1 through the shaping apparatus, so that the battery modules can maintain their existing shapes.

In addition, an embodiment of this disclosure further provides a battery production line, where the battery production line includes: the battery assembly system according to any one of the foregoing embodiments, a production device, a transfer device, and a robot. The production device is configured to produce to-be-assembled battery modules; the transfer device is configured to transport the to-be-assembled battery modules from the production device to the stacking platform, or to transport assembled battery modules from the stacking platform to a target station; and the robot is provided at a position corresponding to the stacking platform, and the robot is configured to take out the to-be-assembled battery modules from the transfer device and place them in trays on the stacking platform, or to take out assembled battery modules from trays and place them on the transfer device.

In this embodiment of this disclosure, the production device may be provided on the battery production line to produce various structural components in battery modules through various production devices.

In this embodiment of this disclosure, in the process of producing battery modules, battery modules that have not completed the production process need to be transported to different production stations. In this case, the transfer device may be provided, and the to-be-assembled battery modules can be transported from the production device to the stacking platform through the transfer device, or the battery modules assembled by the battery assembly system can be transported from the stacking platform to a target station through the transfer device.

In this embodiment of this disclosure, in the process of transporting or assembling battery modules, the battery modules need to be transported to different apparatuses or devices. In this case, the robot may be provided close to the stacking platform, so that the to-be-assembled battery modules can be taken out from the transfer device using the robot and placed in the trays on the stacking platform, or the assembled battery modules in the trays can be taken out from the trays using the robot and placed on the transfer device.

In the foregoing embodiment, as the battery production line is provided with the transfer device, the transfer device can transport the battery modules, so that the battery modules can reach different target stations; and as the robot is provided close to the stacking platform, the battery modules can be transported from the stacking platform to the transfer device through the robot, or transported from the transfer device to the trays on the stacking platform, so as to improve the production efficiency of the battery; meanwhile, the battery assembly system is provided, which can reduce the risk of congestion during the return process of the trays and facilitate the miniaturization of the battery assembly system.

An embodiment of this disclosure further provides a control method of battery assembly system, where the battery assembly system includes a stacking platform, an assembly apparatus, an assembly circulation line connecting one end of the stacking platform to one end of the assembly apparatus, and a return apparatus connecting another end of the stacking platform to another end of the assembly apparatus. Referring to FIG. 10, FIG. 10 is a first flowchart of the control method of battery assembly system according to this embodiment of this disclosure. The control method of battery assembly system includes the following steps S101 to S103.

S101: In response to an assembly instruction, control the assembly circulation line to transport to-be-assembled battery modules located on the stacking platform to the assembly apparatus.

In some embodiments, the assembly instruction may be generated in response to the to-be-assembled battery modules being in place on the stacking platform, or in response to an operation of a user for the battery assembly system. This embodiment of this disclosure does not limit the scenarios for generating the assembly instruction.

In some embodiments, during the assembly process of the to-be-assembled battery modules, the to-be-assembled battery modules and the trays need to be transported to the assembly apparatus through the assembly circulation line. After receiving the assembly instruction, a controller can transmit a control signal to the stacking platform to control the transport mechanism on the stacking platform to transport the trays carrying the to-be-assembled battery modules and the to-be-assembled battery modules to the assembly circulation line, or transmit a control signal to the robot provided close to the stacking platform to control the robot to transport the trays carrying the to-be-assembled battery modules and the to-be-assembled battery modules to the assembly circulation line.

After the to-be-assembled battery modules are located on the assembly circulation line, the controller may transmit a control signal to the assembly circulation line to control the assembly circulation line to transport the trays and the to-be-assembled battery modules carried on the trays to a corresponding assembly apparatus.

S102: Control the assembly apparatus to perform assembly action for the to-be-assembled battery modules.

In some embodiments, multiple assembly apparatuses may be provided in the battery assembly system, and each assembly apparatus may perform the corresponding assembly process steps for the to-be-assembled battery modules.

In some embodiments, after the controller receives the signal that the to-be-assembled battery modules are in place in the assembly apparatus, the controller may transmit a control signal to the assembly apparatus to control the assembly apparatus to perform the corresponding assembly process for the to-be-assembled battery modules until the assembly actions that the assembly apparatus needs to perform are completed.

S103: Control the return apparatus to transport assembled battery modules to the stacking platform, where the assembled battery modules include a battery module assembled by the assembly apparatus.

In some embodiments, after all the assembly process steps for the to-be-assembled battery modules are completed, the assembled battery modules that have undergone the assembly process performed by the assembly apparatus and trays or empty trays can be transported back to the stacking platform. The assembled battery modules and trays may be transported to the stacking platform through the return apparatus.

In some embodiments, after the assembly circulation line transports the assembled battery modules to the return apparatus, the controller may transmit a control signal to the return apparatus to control the return apparatus to perform the transport action to transport the assembled battery modules and trays back to the stacking platform.

In the foregoing embodiment, as the to-be-assembled battery modules located on the stacking platform are transported through the assembly circulation line, the assembly circulation line may be controlled to transport the to-be-assembled battery modules to the corresponding assembly apparatus, and the assembly apparatus may be controlled to perform corresponding assembly action for the to-be-assembled battery modules to assemble the to-be-assembled battery modules. Meanwhile, as the assembly apparatus is connected to the stacking platform through the return apparatus, the trays and the fully assembled battery modules can be returned to the stacking platform by controlling the operation process of the return apparatus. In this way, compared to directly transporting the assembled battery modules from the assembly apparatus to the stacking platform, controlling the return apparatus not only can allow the trays and battery modules to be temporarily stored in the return apparatus through cache positions provided by the return apparatus, can better schedule the return process of the trays and battery modules, enabling the trays and battery modules to quickly return to the stacking platform, but also can reduce the risk of congestion during the return process of the trays and battery modules.

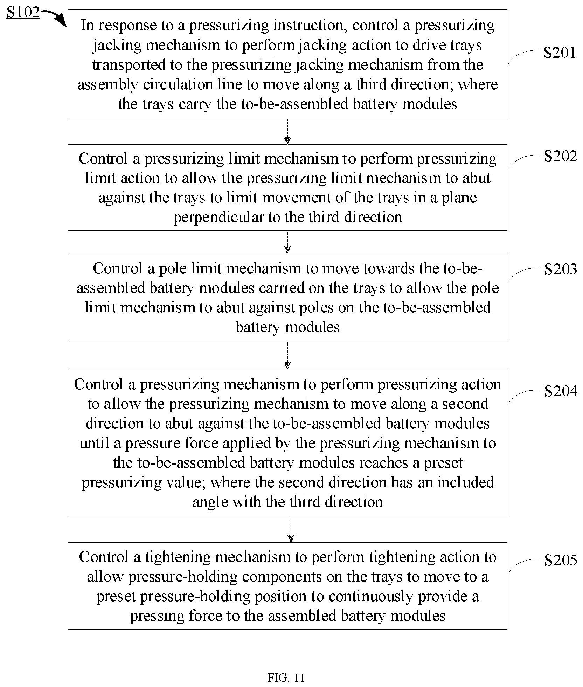

Referring to FIG. 11, FIG. 11 is a second flowchart of a control method of battery assembly system according to an embodiment of this disclosure. Based on FIG. 10, the assembly apparatus includes a pressurizing apparatus; where one end of the pressurizing apparatus is connected to the stacking platform via the assembly circulation line, and another end of the pressurizing apparatus is connected to the return apparatus via the assembly circulation line; the pressurizing apparatus includes a pressurizing jacking mechanism, a pressurizing limit mechanism, a pole limit mechanism, a pressurizing mechanism, and a tightening mechanism; the assembly instruction includes a pressurizing instruction; and as shown in FIG. 11, step S102 in FIG. 10 can be implemented through steps S201 to S205.

S201: In response to the pressurizing instruction, control the pressurizing jacking mechanism to perform jacking action to drive the trays transported to the pressurizing jacking mechanism from the assembly circulation line to move along a third direction; where the trays carry the to-be-assembled battery modules.

In some embodiments, the pressurizing instruction may be generated in response to the to-be-assembled battery modules being in place in the pressurizing apparatus, or in response to a pressurizing operation of a user for the pressurizing apparatus. This embodiment of this disclosure does not limit the scenarios for generating the assembly instruction.

In some embodiments, after the to-be-assembled battery modules and trays carrying the to-be-assembled battery modules are transported to the corresponding position in the pressurizing apparatus through the assembly circulation line, to be specific, after the to-be-assembled battery modules are transported to the pressurizing jacking mechanism, the controller receives the pressurizing instruction, and the controller may transmit a control signal to the pressurizing apparatus to control the pressurizing jacking mechanism in the pressurizing apparatus to perform the jacking action. In response to the control signal, the pressurizing jacking mechanism moves along the third direction towards the pressurizing mechanism to drive the trays to move a specific distance along the third direction. At this time, the to-be-assembled battery modules carried on the trays move together with the trays towards the pressurizing apparatus.

S202: Control the pressurizing limit mechanism to perform pressurizing limit action to allow the pressurizing limit mechanism to abut against the trays to limit movement of the trays in a plane perpendicular to the third direction.

In some embodiments, after the pressurizing jacking mechanism is in place, the controller may transmit a control signal to the pressurizing limit mechanism, and the pressurizing limit mechanism performs the limit action. For example, multiple pressurizing longitudinal limit mechanisms in the pressurizing limit mechanism move towards the trays, so that the multiple pressurizing longitudinal limit mechanisms abut against the trays in the first direction perpendicular to the third direction, thereby limiting the movement of the trays in the first direction. The multiple pressurizing lateral limit mechanisms in the pressurizing limit mechanism also move towards the trays, so that the multiple pressurizing lateral limit mechanisms abut against the trays in the second direction perpendicular to the third direction, thereby limiting the movement of the trays in the second direction.

S203: Control the pole limit mechanism to move towards the to-be-assembled battery modules carried on the trays to allow the pole limit mechanism to abut against poles on the to-be-assembled battery modules.

In some embodiments, after the limitation of the trays is completed, the controller may transmit a control signal to the pole limit mechanism, and the pole limit mechanism may move towards the to-be-assembled battery modules in the third direction, so that the pole limit member in the pole limit mechanism abuts against the poles on the to-be-assembled battery modules, thereby limiting the movement of the poles in the third direction. In this way, after the battery modules are compressed, the risk of deformation of the poles can be reduced.

S204: Control the pressurizing mechanism to perform pressurizing action to allow the pressurizing mechanism to move along a second direction to abut against the to-be-assembled battery modules until a pressure force applied by the pressurizing mechanism to the to-be-assembled battery modules reaches a preset pressurizing value; where the second direction has an included angle with the third direction.

In some embodiments, after the limitation of the poles is completed, the controller may transmit a control signal to the pressurizing mechanism, and the pressurizing mechanism may perform the pressurizing action along the second direction. During the pressurizing action, the pressurizing mechanism moves along the second direction towards the to-be-assembled battery modules. After the pressurizing mechanism abuts against the to-be-assembled battery modules, the pressurizing mechanism continues to move towards the to-be-assembled battery modules until the pressure applied to the to-be-assembled battery modules reaches the preset pressurizing value. The controller then stops the pressurizing action and maintains the pressurizing mechanism in the pressurizing position. This ensures that every battery cell in the battery modules has a high tightness, which is beneficial for the heat dissipation of the battery modules during use.

S205: Control the tightening mechanism to perform tightening action to allow pressure-holding components on the trays to move to a preset pressure-holding position to continuously provide a pressing force to the assembled battery modules.

In some embodiments, after the pressurizing process for the to-be-assembled battery modules is completed, the controller may transmit a control signal to the tightening mechanism, and the tightening mechanism performs the tightening action to drive pressure-holding components on the trays to move to the preset pressure-holding position. In this way, after the pressurizing mechanism is separated from the to-be-assembled battery modules, the pressure-holding components may continuously provide pressing force to the to-be-assembled battery modules, maintaining the shapes of the to-be-assembled battery modules after being pressed by the pressurizing mechanism.

In the foregoing embodiment, controlling the pressurizing jacking mechanism to perform the jacking action can allow the to-be-assembled battery modules to move along the third direction to the position to which the pressing force needs to be applied; controlling the pressurizing limit mechanism to perform the pressurizing limit action can limit the trays through the pressurizing limit mechanism; controlling the pole limit mechanism to perform the limit action can limit the movement of the poles through the pole limit mechanism; controlling the pressurizing mechanism to perform the pressurizing action can complete the pressurizing action for the to-be-assembled battery modules, making the to-be-assembled battery modules have the required tightness; and controlling the tightening mechanism to perform the tightening action can continuously provide pressing force to the to-be-assembled battery modules through the pressure-holding components.

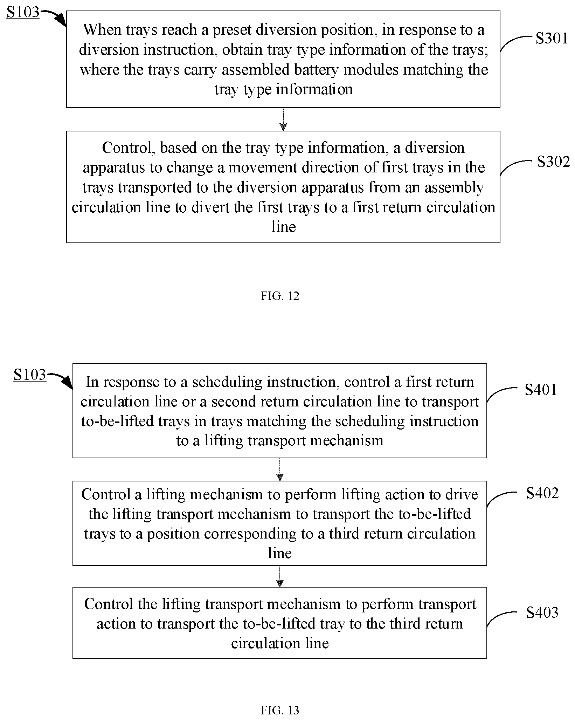

Referring to FIG. 12, FIG. 12 is a third flowchart of the control method of battery assembly system according to an embodiment of this disclosure. Based on FIG. 10, the return apparatus includes a diversion apparatus, a lifting apparatus, and a first return circulation line connecting the second end of the diversion apparatus and one end of the lifting apparatus; the assembly instruction further includes a diversion instruction; as shown in FIG. 12, step S103 in FIG. 10 may be implemented through steps S301 and S302.

S301: When the trays reach a preset diversion position, in response to the diversion instruction, obtain tray type information of the trays; where the trays carry the assembled battery modules matching the tray type information.

In some embodiments, a radio frequency identification (Radio Frequency Identification, RFID) chip may be provided on the trays, and the tray type information of the trays is stored in the RFID. For example, the trays used to carry single-row to-be-assembled battery modules may be single-row module trays, and the trays used to carry double-row to-be-assembled battery modules may be double-row module trays.

In some embodiments, the preset diversion position may be set at the tail end of the assembly circulation line adjacent to the diversion apparatus. The diversion instruction may be generated in response to the trays reaching the preset diversion position.

In some embodiments, when it is detected that the trays are moving to the tail end of the assembly circulation line, the controller transmits control information to an information acquisition device, and the information acquisition device obtains the tray type information of the trays through RFID to determine whether the trays are single-row module trays or double-row module trays.

S302: Control, based on the tray type information, the diversion apparatus to change a movement direction of first trays in the trays transported to the diversion apparatus from the assembly circulation line to divert the first trays to the first return circulation line.

In some embodiments, after the trays are transported to the diversion apparatus from the assembly circulation line, it can be determined based on the obtained tray type information whether the movement direction of the trays needs to be changed to allow the trays reach the corresponding return circulation line.

In some embodiments, if the tray type information of the trays indicates that the trays are double-row module trays, the movement direction of the trays does not need to be changed, and the trays reach the second return circulation line after passing through the diversion apparatus along the original movement direction. If the tray type information of the trays indicates that the trays are first trays, to be specific, the trays are single-row module trays, the movement direction of the first trays needs to be changed. At this time, a control signal may be transmitted to the diversion apparatus, and the diversion apparatus performs the corresponding diversion action to transport the first trays to the first return circulation line.

In the foregoing embodiment, the tray type information is obtained when the trays reach the preset diversion position, it can be determined based on the tray type information whether the movement direction of the trays needs to be changed through the diversion apparatus to allow the trays to move to the first return circulation line; and if it is determined that the trays are the first trays, the diversion action can be performed through the diversion apparatus to transport the first trays to the first return circulation line.

Referring to FIG. 13, FIG. 13 is a fourth flowchart of the control method of battery assembly system according to an embodiment of this disclosure. Based on FIG. 10, the return apparatus further includes a second return circulation line and a third return circulation line; where a third end of the diversion apparatus is connected to another end of the lifting apparatus via the second return circulation line, and another end of the lifting apparatus is further connected to the stacking platform via the third return circulation line; the lifting apparatus includes a lifting mechanism and a lifting transport mechanism connected to the lifting mechanism; the assembly instruction further includes a scheduling instruction; and as shown in FIG. 13, step S103 in FIG. 10 may also be implemented through steps S401 to S403.

S401: In response to the scheduling instruction, control the first return circulation line or the second return circulation line to transport to-be-lifted trays in the trays matching the scheduling instruction to the lifting transport mechanism.

In some embodiments, the scheduling instruction may be generated in response to the stacking platform having empty storage positions or in response to an operation of the user. The embodiments of this disclosure do not limit the scenarios for generating the scheduling instruction.

In some embodiments, after receiving the scheduling instruction, the controller may transmit a control signal to the first return circulation line or second return circulation line corresponding to the scheduling instruction to control the first return circulation line or the second return circulation line to transport the to-be-lifted trays to the lifting transport mechanism.

S402: Control the lifting mechanism to perform lifting action to drive the lifting transport mechanism to transport the to-be-lifted trays to a position corresponding to the third return circulation line.

In some embodiments, after the to-be-lifted trays are in place on the lifting transport mechanism, the controller may transmit a control signal to the lifting apparatus to allow the lifting mechanism perform the lifting action to transport the lifting transport mechanism along with the to-be-lifted trays to the position corresponding to the third return circulation line.

S403: Control the lifting transport mechanism to perform transport action to transport the to-be-lifted tray to the third return circulation line.

In some embodiments, after the lifting transport mechanism reaches the preset position, the lifting transport mechanism may be controlled to perform the transport action to transport the to-be-lifted trays on the lifting transport mechanism to the third return circulation line.

In the foregoing embodiment, controlling the first return circulation line or the second return circulation line to perform the transport action can transport the to-be-lifted trays corresponding to the scheduling instruction to the lifting transport mechanism; controlling the lifting mechanism in the lifting apparatus to perform the lifting action can transport the to-be-lifted trays to the position corresponding to the third return circulation line; and controlling the lifting transport mechanism to perform the transport action can transport the to-be-lifted trays to the third return circulation line, to complete the lifting of the to-be-lifted trays.

The foregoing embodiments are for description of the technical solutions of this disclosure only rather than for limiting this disclosure. Although this disclosure has been described in detail with reference to the foregoing embodiments, persons of ordinary skill in the art should appreciate that they can still make modifications to the technical solutions described in the embodiments or make equivalent replacements to some or all technical features thereof. However, these modifications or replacements do not make the essence of the corresponding technical solutions deviate from the scope of the technical solutions of the embodiments of this disclosure, and they should all be included in the scope of the claims and description of this disclosure. In particular, as long as there is no structural conflict, the various technical features mentioned in the embodiments can be combined in any manner.

### Industrial applicability

This disclosure proposes a battery assembly system, a control method, and a battery production line. The battery assembly system includes a stacking platform, an assembly apparatus, an assembly circulation line, and a return apparatus. The stacking platform is configured to store trays and battery modules located within the trays; one end of the assembly apparatus is connected to one end of the stacking platform via the assembly circulation line; the assembly apparatus is configured to perform assembly process for to-be-assembled battery modules; the assembly circulation line is configured to transport trays carrying the to-be-assembled battery modules to the assembly apparatus; another end of the assembly apparatus is connected to another end of the stacking platform via the return apparatus; and the return apparatus is configured to transport trays carrying assembled battery modules to the stacking platform. The battery assembly system can reduce the risk of congestion during the return process of trays and facilitate the miniaturization of the battery assembly system.

## Claims

1. A battery assembly system, wherein the battery assembly system comprises:
a stacking platform, wherein the stacking platform is configured to store trays and battery modules located within the trays;
an assembly apparatus, wherein one end of the assembly apparatus is connected to one end of the stacking platform via an assembly circulation line, the assembly apparatus is configured to perform assembly process for to-be-assembled battery modules, and the assembly circulation line is configured to transport trays carrying to-be-assembled battery modules to the assembly apparatus; and
a return apparatus, wherein another end of the assembly apparatus is connected to another end of the stacking platform via the return apparatus, and the return apparatus is configured to transport trays carrying assembled battery modules to the stacking platform;
wherein the return apparatus comprises a diversion apparatus, a first return circulation line, and a second return circulation line; wherein a first end of the diversion apparatus is connected to the assembly apparatus via the assembly circulation line, a second end of the diversion apparatus is connected to one end of the stacking platform via the first return circulation line, and a third end of the diversion apparatus is connected to another end of the stacking platform via the second return circulation line; and the diversion apparatus is configured to divert trays carrying different types of the assembled battery modules to the corresponding first return circulation line or second return circulation line based on the types of the assembled battery modules.

2. The battery assembly system according to claim 1, wherein the diversion apparatus comprises a diversion support, a diversion jacking mechanism, and a diversion transport mechanism; wherein the diversion support is installed at a position corresponding to the first return circulation line; one end of the diversion jacking mechanism is connected to the diversion support, and another end of the diversion jacking mechanism is connected to the diversion transport mechanism; the diversion jacking mechanism is capable of driving the diversion transport mechanism to move along a third direction; and the diversion transport mechanism is configured to support the trays and is capable of transporting the trays to the first return circulation line along a first direction, the first direction intersecting with the third direction.

3. The battery assembly system according to claim 2, wherein the diversion transport mechanism comprises a diversion transport drive component and a diversion frame; wherein the diversion frame is installed on the diversion jacking mechanism; the diversion transport drive component is installed on the diversion frame; and the diversion transport drive component is configured to support the trays and is capable of transporting the trays along the first direction.

4. The battery assembly system according to any one of claims 1 to 3, wherein the return apparatus further comprises a lifting apparatus and a third return circulation line; wherein one end of the lifting apparatus is connected to the second end of the diversion apparatus via the first return circulation line, and another end of the lifting apparatus is connected to one end of the stacking platform via the third return circulation line; the third end of the diversion apparatus is connected to another end of the lifting apparatus via the second return circulation line; the lifting apparatus is configured to transport the trays located on the first return circulation line or the second return circulation line to the third return circulation line according to a scheduling instruction; and along the third direction, at least a portion of the second return circulation line overlaps with the assembly circulation line, and at least another portion of the second return circulation line overlaps with the third return circulation line.

5. The battery assembly system according to claim 4, wherein the lifting apparatus comprises a lifting support, a lifting mechanism, and a lifting transport mechanism; wherein the lifting mechanism is installed on the lifting support; the lifting transport mechanism is installed on the lifting mechanism; the lifting mechanism is capable of driving the lifting transport mechanism to move along the third direction with respect to the lifting support; and the lifting transport mechanism is configured to transport the trays to the third return circulation line along a second direction, the second direction having an included angle with the third direction.

6. The battery assembly system according to claim 5, wherein the lifting mechanism comprises a lifting drive component, a lifting guide component, and a lifting frame; wherein the lifting guide component is installed on the lifting support; the lifting frame is installed on the lifting guide component; one end of the lifting drive component is connected to the lifting support, and another end of the lifting drive component is connected to the lifting frame; and under the drive of the lifting drive component, the lifting frame is capable of moving along the third direction.

7. The battery assembly system according to claim 6, wherein the lifting transport mechanism comprises a lifting transport frame and a lifting transport drive component; wherein the lifting transport frame is installed on the lifting frame; the lifting transport drive component is installed on the lifting transport frame; and the lifting transport drive component is configured to support the trays and is capable of transporting the trays to the third return circulation line along the second direction.

8. The battery assembly system according to claim 7, wherein the lifting apparatus further comprises a lifting limit mechanism, wherein in the second direction, the lifting limit mechanism is provided at each of two ends of the lifting transport frame, and the lifting limit mechanism is capable of moving along the third direction to limit movement of the trays with respect to the lifting transport mechanism along the second direction.

9. The battery assembly system according to claim 5, wherein the lifting apparatus further comprises a lifting detection member, wherein in the second direction, the lifting detection member is provided at each of two ends of the lifting apparatus, and the lifting detection member is configured to detect a movement state of the trays.

10. The battery assembly system according to any one of claims 1 to 9, wherein the assembly apparatus comprises a pressurizing apparatus, and the pressurizing apparatus comprises a pressurizing support and a pressurizing mechanism, wherein the pressurizing support is provided at a position corresponding to the assembly circulation line, the pressurizing mechanism is installed on the pressurizing support, the pressurizing mechanism is configured to apply a pressing force to the to-be-assembled battery modules, and the assembly circulation line is capable of transporting trays carrying the to-be-assembled battery modules to a position corresponding to the pressurizing mechanism in the pressurizing apparatus.

11. The battery assembly system according to claim 10, wherein the pressurizing apparatus further comprises a pressurizing movable mechanism, wherein the pressurizing movable mechanism is movably provided on the pressurizing support and is capable of moving along the first direction with respect to the pressurizing support.

12. The battery assembly system according to claim 11, wherein the pressurizing mechanism comprises a pressurizing drive component, a pressurizing guide component, and a pressurizing member; wherein the pressurizing guide component is connected to the pressurizing movable mechanism and extends along the second direction; the pressurizing member is installed on the pressurizing guide component; one end of the pressurizing drive component is connected to the pressurizing movable mechanism, and another end of the pressurizing drive component is connected to the pressurizing member; and under the drive of the pressurizing drive component, the pressurizing member is capable of moving along the second direction to abut against or separate from the to-be-assembled battery modules, the first direction having an included angle with the second direction.

13. The battery assembly system according to claim 11, wherein the pressurizing apparatus further comprises a pressurizing lateral limit mechanism, and the pressurizing lateral limit mechanism comprises a pressurizing lateral limit drive member and a pressurizing lateral limit member; wherein the pressurizing lateral limit drive member is connected to the pressurizing movable mechanism; the pressurizing lateral limit member is installed on the pressurizing lateral limit drive member; and under the drive of the pressurizing lateral limit drive member, the pressurizing lateral limit member is capable of moving along the second direction to abut against or separate from the trays.

14. The battery assembly system according to claim 11, wherein the pressurizing apparatus further comprises a tightening mechanism, and the tightening mechanism comprises a tightening drive member and a tightening member; wherein the tightening drive member is connected to the pressurizing movable mechanism; the tightening member is connected to the tightening drive member; and under the drive of the tightening drive member, the tightening member is capable of moving along the second direction so that the tightening member is connected to an adjustment member on the trays, and the tightening member is configured to drive the adjustment member to move so that pressure-holding components on the trays is driven through the adjustment member to abut against the assembled battery modules.

15. The battery assembly system according to claim 11, wherein the pressurizing apparatus further comprises a pole limit mechanism, and the pole limit mechanism comprises a pole vertical drive component, a pole vertical guide component, and a pole limit member; wherein the pole vertical guide component is installed on the pressurizing movable mechanism and extends along the third direction; the pole limit member is installed on the pole vertical guide component; one end of the pole vertical drive component is connected to the pressurizing movable mechanism, and another end of the pole vertical drive component is connected to the pole limit member; and under the drive of the pole vertical drive component, the pole limit member is capable of moving along the third direction to abut against or separate from the to-be-assembled battery modules, the third direction having an included angle with the first direction.

16. The battery assembly system according to claim 15, wherein the pole limit mechanism further comprises a pole lateral drive component and a pole lateral guide component; wherein the pole lateral guide component is connected to the pressurizing movable mechanism; one end of the pole lateral drive component is connected to the pressurizing movable mechanism, and another end of the pole lateral drive component is connected to the pole lateral guide component; the pole vertical guide component is connected to the pole lateral guide component; the pole vertical drive component is provided on the pole lateral guide component; and under the drive of the pole lateral drive component, the pole vertical guide component is capable of moving along the second direction to drive the pole limit member to move along the second direction.

17. The battery assembly system according to any one of claims 10 to 15, wherein the pressurizing apparatus further comprises a pressurizing jacking mechanism and a pressurizing longitudinal limit mechanism; wherein the pressurizing jacking mechanism is installed on the pressurizing support, and the pressurizing jacking mechanism is configured to support the trays and is capable of driving the trays to move along the third direction; and the pressurizing longitudinal limit mechanism is installed on the pressurizing support and is capable of moving along the first direction to abut against or separate from the trays.

18. The battery assembly system according to any one of claims 10 to 15, wherein the assembly apparatus further comprises an installation apparatus and a shaping apparatus; wherein the installation apparatus is provided at a position corresponding to the assembly circulation line and is located on a side of the pressurizing apparatus close to the stacking platform, and the installation apparatus is configured to install to-be-assembled parts on the to-be-assembled battery modules; and the shaping apparatus is provided at a position corresponding to the assembly circulation line and is located on a side of the pressurizing apparatus far away from the stacking platform, and the shaping apparatus is configured to provide shaping components on the pressurized battery modules to maintain existing shapes of the pressurized battery modules through the shaping components.

19. A battery production line, comprising:
the battery assembly system according to any one of claims 1 to 18;
a production device, wherein the production device is configured to produce to-be-assembled battery modules;
a transfer device, wherein the transfer device is configured to transport the to-be-assembled battery modules from the production device to the stacking platform, or to transport assembled battery modules from the stacking platform to a target station; and
a robot, wherein the robot is provided at a position corresponding to the stacking platform, and the robot is configured to take out the to-be-assembled battery modules from the transfer device and place them in trays located on the stacking platform, or to take out assembled battery modules from trays and place them on the transfer device.

20. A control method of battery assembly system, wherein the battery assembly system comprises a stacking platform, an assembly apparatus, an assembly circulation line connecting one end of the stacking platform to one end of the assembly apparatus, and a return apparatus connecting another end of the stacking platform to another end of the assembly apparatus; and the method comprises:
in response to an assembly instruction, controlling the assembly circulation line to transport to-be-assembled battery modules located on the stacking platform to the assembly apparatus;
controlling the assembly apparatus to perform assembly action for the to-be-assembled battery modules; and
controlling the return apparatus to transport assembled battery modules to the stacking platform, wherein the assembled battery modules comprise a battery module assembled by the assembly apparatus.

21. The control method of battery assembly system according to claim 20, wherein the assembly apparatus comprises a pressurizing apparatus; wherein one end of the pressurizing apparatus is connected to the stacking platform via the assembly circulation line, and another end of the pressurizing apparatus is connected to the return apparatus via the assembly circulation line; the pressurizing apparatus comprises a pressurizing jacking mechanism, a pressurizing limit mechanism, a pole limit mechanism, a pressurizing mechanism, and a tightening mechanism; the assembly instruction comprises a pressurizing instruction; and the controlling the assembly apparatus to perform assembly process for the to-be-assembled battery modules comprises:
in response to the pressurizing instruction, controlling the pressurizing jacking mechanism to perform jacking action to drive the trays transported to the pressurizing jacking mechanism from the assembly circulation line to move along a third direction; wherein the trays carry the to-be-assembled battery modules;
controlling the pressurizing limit mechanism to perform pressurizing limit action to allow the pressurizing limit mechanism to abut against the trays to limit the movement of the trays in a plane perpendicular to the third direction;
controlling the pole limit mechanism to move towards the to-be-assembled battery modules carried on the trays to allow the pole limit mechanism to abut against poles on the to-be-assembled battery modules;
controlling the pressurizing mechanism to perform pressurizing action to allow the pressurizing mechanism to move along a second direction to abut against the to-be-assembled battery modules until a pressure force applied by the pressurizing mechanism to the to-be-assembled battery modules reaches a preset pressurizing value; wherein the second direction has an included angle with the third direction; and
controlling the tightening mechanism to perform tightening action to allow pressure-holding components on the trays to move to a preset pressure-holding position to continuously provide a pressing force to assembled battery modules.

22. The control method of battery assembly system according to claim 21, wherein the return apparatus comprises a diversion apparatus, a lifting apparatus, and a first return circulation line connecting a second end of the diversion apparatus and one end of the lifting apparatus; the assembly instruction further comprises a diversion instruction; and the controlling the return apparatus to transport assembled battery modules to the stacking platform comprises:
when the trays reach a preset diversion position, in response to the diversion instruction, obtaining tray type information of the trays; wherein the trays carry the assembled battery modules matching the tray type information; and
controlling, based on the tray type information, the diversion apparatus to change a movement direction of first trays in the trays transported to the diversion apparatus from the assembly circulation line to divert the first trays to the first return circulation line.

23. The control method of battery assembly system according to claim 22, wherein the return apparatus further comprises a second return circulation line and a third return circulation line; wherein a third end of the diversion apparatus is connected to another end of the lifting apparatus via the second return circulation line, and another end of the lifting apparatus is further connected to the stacking platform via the third return circulation line; the lifting apparatus comprises a lifting mechanism and a lifting transport mechanism connected to the lifting mechanism; the assembly instruction further comprises a scheduling instruction; and the controlling the return apparatus to transport assembled battery modules to the stacking platform further comprises:
in response to the scheduling instruction, controlling the first return circulation line or the second return circulation line to transport a to-be-lifted tray in the trays matching the scheduling instruction to the lifting transport mechanism;
controlling the lifting mechanism to perform lifting action to drive the lifting transport mechanism to transport the to-be-lifted tray to a position corresponding to the third return circulation line; and
controlling the lifting transport mechanism to perform transport action to transport the to-be-lifted tray to the third return circulation line.
